# EUROPEAN PATENT APPLICATION

(11) **EP 4 801 038 A1**
(43) Date of publication of application: **02.09.2026**
(21) Application number: 24882807.1
(22) Date of filing: 23.10.2024
(51) Int. Cl.: H04N 19/597, H04N 19/119, H04N 19/70, H04N 19/20

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(30) Priority: 23.10.2023 KR 20230141634
(71) Applicant: LG Electronics Inc., Yeongdeungpo-gu Seoul 07336 (KR)
(72) Inventor: HUR, Hyejung, Seoul 06772 (KR)
(74) Representative: Jung, Minkyu
(86) International application number: PCT/KR2024/016153
(87) International publication number: WO 2025/089780

(57) **Abstract**

A decoding method according to embodiments comprises the steps of: decoding geometry information in point cloud data; and decoding attribute information in the point cloud data, wherein the step of decoding geometry information can comprise the steps of: dividing the geometry information into a plurality of prediction units on the basis of information related to scene configuration; and configuring a scene on the basis of the plurality of prediction units.

## Description

### TECHNICAL FIELD

Embodiments relate to a method and device for processing point cloud content.

### BACKGROUND

Point cloud content is content represented by a point cloud, which is a set of points belonging to a coordinate system representing a three-dimensional space (or volume). The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

In other words, a high throughput is required to transmit and receive data of the point cloud. Accordingly, in the process of transmitting and receiving the point cloud data, in which encoding for compression and decoding for decompression are performed, the computational operation is complicated and time-consuming due to the large volume of the point cloud data.

### DISCLOSURE

### Technical Problem

An object of the present disclosure devised to solve the above-described problems is to provide devices and methods for efficiently transmitting/receiving a point cloud.

An object of the embodiments is to provide a device and a method for resolving latency and encoding/decoding complexity.

An object of the embodiments is to provide an apparatus and method for improving point cloud compression performance by enhancing an encoding technique for an attribute in geometry-based point cloud compression (G-PCC).

An object of embodiments is to provide a method and device for improving the compression performance of geometry information by configuring a scene into specific units.

However, the scope of the embodiments may not be limited to the objects described above and may be extended to other technical objects to be inferred by those skilled in the art based on the entire content of this specification.

### Technical Solution

To obtain the objects described above and other advantages, a decoding method according to embodiments may include receiving a bitstream including point cloud data and decoding the point cloud data.

According to embodiments, the decoding of the point cloud data may include decoding geometry information within the point cloud data and decoding attribute information within the point cloud data.

According to embodiments, the decoding of the geometry information may include partitioning the geometry information into a plurality of prediction units based on information related to scene construction, and constructing a scene based on the plurality of prediction units.

According to embodiments, the scene may include a 2^{k} bounding box area having a minimum k that includes the point cloud data, and the plurality of prediction units may each have origin information and size information.

According to embodiments, the bitstream includes the information related to the scene construction, the information related to the scene construction may include information specifying whether a scene is constructed and scene construction information, and the scene construction information may include identification information, origin information, and size information for each of the plurality of prediction units.

According to embodiments, the scene construction information may further include threshold information for the scene construction.

According to embodiments, the decoding device includes a memory and at least one processor connected to the memory, and the at least one processor may be configured to receive a bitstream including point cloud data and to decode the point cloud data.

According to embodiments, the at least one processor may include a geometry decoder configured to decode geometry information within the point cloud data, and an attribute decoder configured to decode attribute information within the point cloud data.

According to embodiments, the geometry decoder may be configured to partition the geometry information into a plurality of prediction units based on information related to scene construction and construct a scene based on the plurality of prediction units.

According to embodiments, the scene may include a 2^{k} bounding box area having a minimum k that includes the point cloud data, and the plurality of prediction units may each have origin information and size information.

According to embodiments, the bitstream includes the information related to the scene construction, the information related to the scene construction may include information specifying whether a scene is constructed and scene construction information, and the scene construction information may include identification information, origin information, and size information for each of the plurality of prediction units.

According to embodiments, the scene construction information may further include threshold information for the scene construction.

According to embodiments, the encoding method may include encoding point cloud data and transmitting a bitstream including the point cloud data.

According to embodiments, the encoding of the point cloud data may include encoding geometry information within the point cloud data and encoding attribute information within the point cloud data.

According to embodiments, the encoding of the geometry information may include partitioning the geometry information into a plurality of prediction units based on information related to scene construction, and constructing a scene based on the plurality of prediction units.

According to embodiments, the scene may include a 2^{k} bounding box area having a minimum k that includes the point cloud data, and the plurality of prediction units may each have origin information and size information.

According to embodiments, the bitstream includes the information related to the scene construction, the information related to the scene construction may include information specifying whether a scene is constructed and scene construction information, and the scene construction information may include identification information, origin information, and size information for each of the plurality of prediction units.

According to embodiments, the scene construction information may further include threshold information for the scene construction.

### Advantageous Effects

A device and method according to embodiments may provide a high-quality point cloud service.

The device and method according to embodiments may obtain various video codec methods.

The device and method according to embodiments may provide general-purpose point cloud content, such as autonomous driving services.

The device and method according to embodiments may provide improved parallel processing and scalability by performing spatial adaptive partition of point cloud data for independent encoding and decoding of point cloud data.

The device and method according to embodiments may improve the encoding and decoding performance of a point cloud by spatially partitioning the point cloud data into tile and/or slice units to perform encoding and decoding and signaling the data necessary for this purpose.

The device and method according to embodiments may reduce a bitstream configuration and size of the captured content by combining a scene description or scene graph with a compression unit and efficiently applying a coding tool, an inter-tool, and the like when compressing the captured content, thereby enabling efficient support for the compression of the captured content.

The device and method according to embodiments may perform more efficient compression of geometry information by compressing the point cloud and constructing the scene in the case of content used in real time.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.
FIG. 1 shows an exemplary point cloud content providing system according to embodiments.
FIG. 2 is a block diagram illustrating a point cloud content providing operation according to embodiments.
FIG. 3 illustrates an exemplary point cloud encoder according to embodiments.
FIG. 4 shows an example of an octree and occupancy code according to embodiments.
FIG. 5 illustrates an example of point configuration in each LOD according to embodiments.
FIG. 6 illustrates an example of point configuration in each LOD according to embodiments.
FIG. 7 illustrates an exemplary point cloud decoder according to embodiments.
FIG. 8 illustrates a transmission device according to embodiments.
FIG. 9 illustrates a reception device according to embodiments.
FIG. 10 illustrates an exemplary structure operable in connection with point cloud data transmission/reception methods/devices according to embodiments.
FIG. 11 is a diagram showing an example of a scene graph according to embodiments.
FIG. 12 is a diagram showing an example of a process unit constituting a scene according to embodiments.
FIG. 13 is a diagram illustrating another exemplary point cloud transmission device according to embodiments.
FIG. 14 is a diagram illustrating exemplary operations of a geometry encoder and an attribute encoder according to embodiments.
FIG. 15 is a diagram showing another example of a point cloud reception device according to embodiments.
FIG. 16 is a diagram illustrating exemplary operations of a geometry decoder and an attribute decoder according to embodiments.
FIG. 17 illustrates an example bitstream structure of point cloud data for transmission/reception according to embodiments.
FIG. 18 is a diagram showing an example of a syntax structure of a sequence parameter set according to embodiments.
FIG. 19 is a diagram showing an example of a syntax structure of a geometry parameter set according to embodiments.
FIG. 20 is a diagram showing an embodiment of a syntax structure of a tile parameter set according to embodiments.
FIG. 21 is a diagram showing an example of a syntax structure of a geometry slice header according to embodiments.
FIG. 22 shows a flowchart of a point cloud data transmission method according to embodiments.
FIG. 23 shows a flowchart of a point cloud data reception method according to embodiments.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. It should be noted that the following examples are only for embodying the present disclosure and do not limit the scope of the present disclosure. What can be easily inferred by an expert in the technical field to which the present disclosure belongs from the detailed description and examples of the present disclosure is to be interpreted as being within the scope of the present disclosure.

The detailed description in this present specification should be construed in all aspects as illustrative and not restrictive. The scope of the disclosure should be determined by the appended claims and their legal equivalents, and all changes coming within the meaning and equivalency range of the appended claims are intended to be embraced therein.

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in this specification have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings. In addition, the following drawings and detailed description should not be construed as being limited to the specifically described embodiments, but should be construed as including equivalents or substitutes of the embodiments described in the drawings and detailed description.

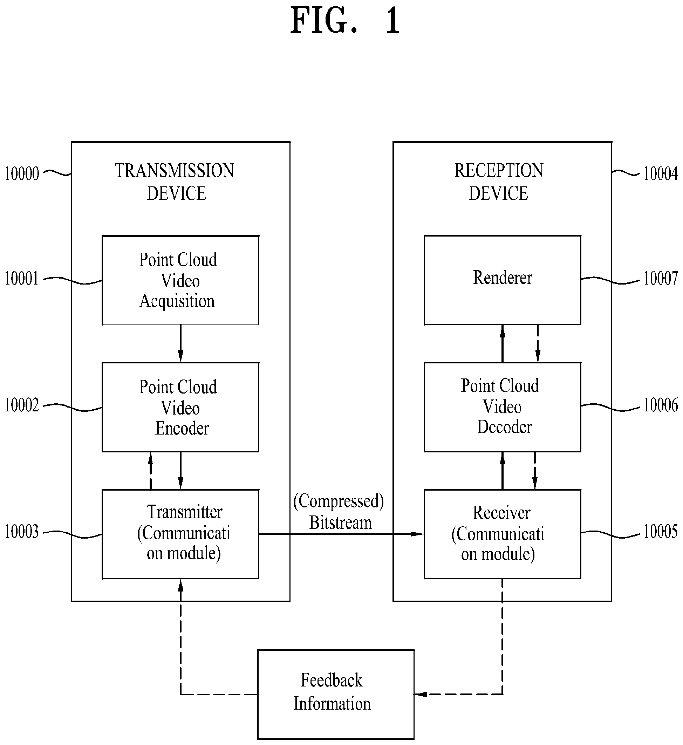

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. In one embodiment, the renderer 10007 may render the decoded point cloud video data according to a viewport or the like. The renderer 10007 may render not only the point cloud video data but also audio data to output point cloud content. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to the embodiments may represent information about a position, orientation, angle, and motion of a user's head. The reception device 10004 according to the embodiments may calculate viewport information based on the head orientation information. The viewport information is information about a region of a point cloud video that the user is viewing (that is, a region that the user is currently viewing). That is, the viewport information is information about a region that the user is currently viewing in the point cloud video. In other words, the viewport or viewport region may represent a region that the user is viewing in the point cloud video. A viewpoint is a point that the user is viewing in the point cloud video, and may represent a center point of the viewport region. That is, the viewport is a region centered on a viewpoint, and the size and shape of the region may be determined by a field of view (FOV). Accordingly, the reception device 10004 may extract the viewport information based on a vertical or horizontal FOV supported by the device as well as the head orientation information. In addition, the reception device 10004 may perform gaze analysis or the like based on the head orientation information and/or the viewport information to determine the way the user consumes a point cloud video, a region at which the user gazes in the point cloud video, and the gaze time. According to embodiments, the reception device 10004 may transmit feedback information including the result of the gaze analysis to the transmission device 10000. According to embodiments, a device such as a VR/XR/AR/MR display may extract a viewport region based on the position/orientation of a user's head and a vertical or horizontal FOV supported by the device. According to embodiments, the head orientation information and the viewport information may be referred to as feedback information, signaling information, or metadata.

The feedback information according to the embodiments may be acquired in the rendering and/or display process. The feedback information may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The feedback information may not only be transmitted to the transmitting side, but also be consumed at the receiving side. That is, the point cloud content providing system may process (encode/decode/render) point cloud data based on the feedback information. For example, the point cloud video decoder 10006 and the renderer 10007 may preferentially decode and render only the point cloud video for a region currently viewed by the user, based on the feedback information, namely, the head orientation information and/or the viewport information.

Furthermore, the reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, transmission system or the like, and the reception device 10004 may be called a decoder, a receiving device, a receiver, receiving system or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor connected to a memory, and/or a combination thereof.

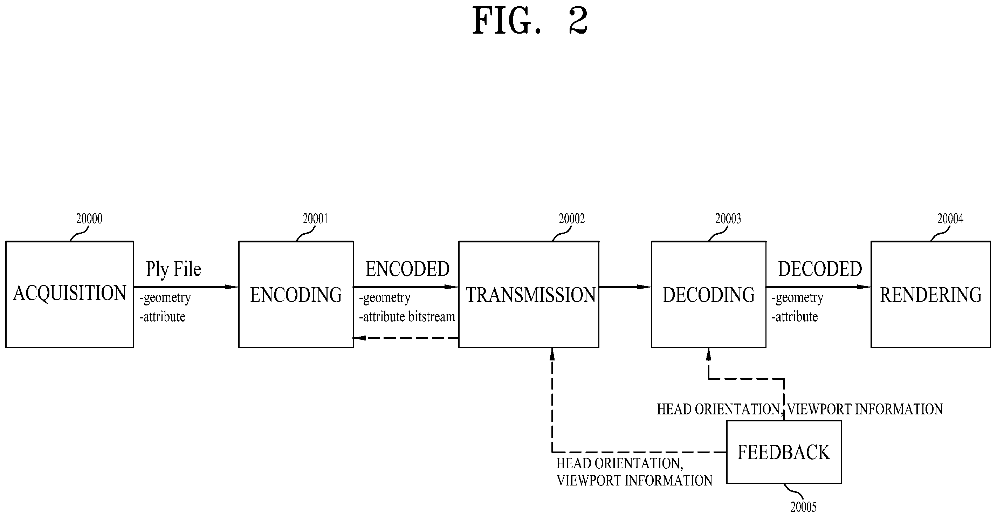

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquisition unit 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data (20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

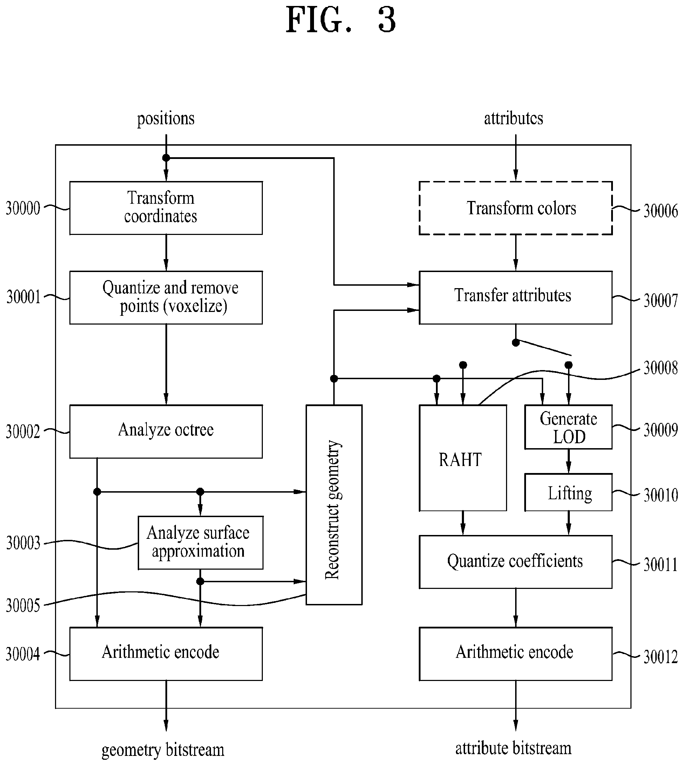

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud video encoder according to the embodiments includes a coordinate transformer (Transform coordinates) 30000, a quantizer (Quantize and remove points (voxelize)) 30001, an octree analyzer (Analyze octree) 30002, a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transfer attributes) 30007, a RAHT transformer 30008, an LOD generator (Generated LOD) 30009, a lifting transformer (Lifting) 30010, a coefficient quantizer (Quantize coefficients) 30011, and/or an arithmetic encoder (Arithmetic encode) 30012. In the point cloud encoder of FIG. 3, the coordinate transformer 30000, the quantizer 30001, the octree analyzer 30002, the surface approximation analyzer 30003, the arithmetic encoder 30004, and the geometry reconstructor 30005 may be grouped together and referred to as a geometry encoder. The color transformer 30006, the attribute transformer 30007, the RAHT transformer 30008, the LOD generator 30009, the lifting transformer 30010, the coefficient quantizer 30011, and/or the arithmetic encoder 30012 may be grouped together and referred to as an attribute encoder.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 30008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

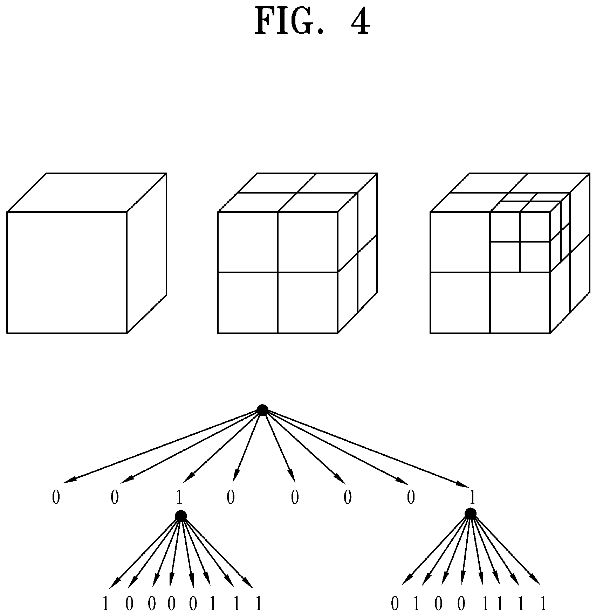

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles (0, 0, 0) and (2^{d}, 2^{d}, 2^{d}). Here, 2d may be set to a value constituting the smallest bounding box surrounding all points of the point cloud content (or point cloud video). Here, d denotes the depth of the octree. The value of d is determined in the following equation. In the following equation, (x^{int}ₙ, y^{int}ₙ, z^{int}ₙ) denotes the positions (or position values) of quantized points.$d = Ceil \left(Log2\left(Max\left({x}_{n}^{int},{y}_{n}^{int},{z}_{n}^{int},n=1,…,N\right)+1\right)\right)$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector (Δx, Δy, Δz) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.$\left[\begin{matrix}{μ}_{x} \\ {μ}_{y} \\ {μ}_{z}\end{matrix}\right] = \frac{1}{n} {\sum }_{i = 1}^{n} \left[\begin{matrix}{x}_{i} \\ {y}_{i} \\ {z}_{i}\end{matrix}\right] \left[\begin{matrix}{\overline{x}}_{i} \\ {\overline{y}}_{i} \\ {\overline{z}}_{i}\end{matrix}\right] = \left[\begin{matrix}{x}_{i} \\ {y}_{i} \\ {z}_{i}\end{matrix}\right] - \left[\begin{matrix}{μ}_{x} \\ {μ}_{y} \\ {μ}_{z}\end{matrix}\right] \left[\begin{matrix}{σ}_{x}^{2} \\ {σ}_{y}^{2} \\ {σ}_{z}^{2}\end{matrix}\right] = {\sum }_{i = 1}^{n} \left[\begin{matrix}{\overline{x}}_{i}^{2} \\ {\overline{y}}_{i}^{2} \\ {\overline{z}}_{i}^{2}\end{matrix}\right]$

The minimum value of the sum is estimated, and the projection process is performed according to the axis with the minimum value. For `example, when the element x is the minimum, each vertex is projected on the x-axis with respect to the center of the block, and projected on the (y, z) plane. When the values obtained through projection on the (y, z) plane are (ai, bi), the value of θ is estimated through atan2(bi, ai), and the vertices are ordered based on the value of θ. The table 1 below shows a combination of vertices for creating a triangle according to the number of the vertices. The vertices are ordered from 1 to n. The table 1 below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

**[Table 1]**

| [Table 1] Triangles formed from vertices ordered 1,..., n | |
|---|---|
| ***n*** | **Triangles** |
| **3** | (1,2,3) |
| **4** | (1,2,3), (3,4,1) |
| **5** | (1,2,3), (3,4,5), (5,1,3) |
| **6** | (1,2,3), (3,4,5), (5,6,1), (1,3,5) |
| **7** | (1,2,3), (3,4,5), (5,6,7), (7,1,3), (3,5,7) |
| **8** | (1,2,3), (3,4,5), (5,6,7), (7,8,1), (1,3,5), (5,7,1) |
| **9** | (1,2,3), (3,4,5), (5,6,7), (7,8,9), (9,1,3), (3,5,7), (7,9,3) |
| **10** | (1,2,3), (3,4,5), (5,6,7), (7,8,9), (9,10,1), (1,3,5), (5,7,9), (9,1,5) |
| **11** | (1,2,3), (3,4,5), (5,6,7), (7,8,9), (9,10,11), (11,1,3), (3,5,7), (7,9,11), (11,3,7) |
| **12** | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

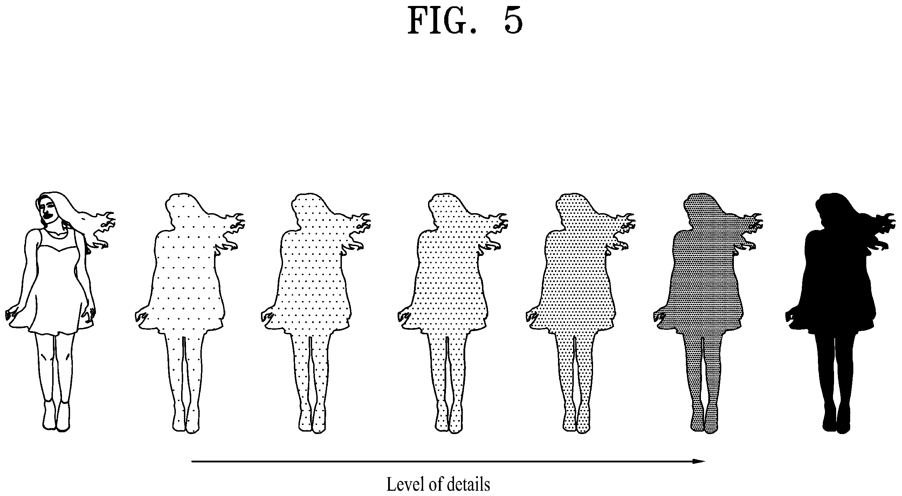

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

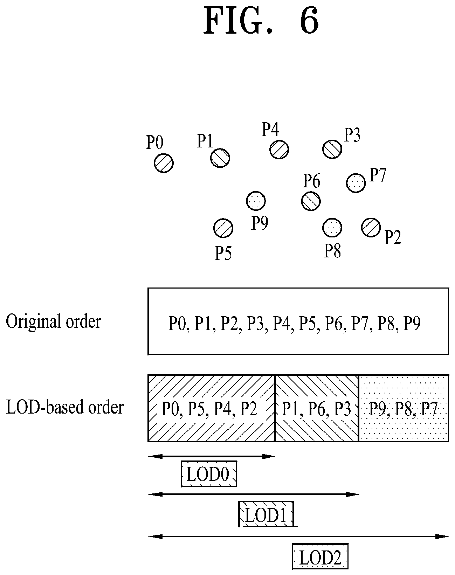

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, attribute prediction residuals, or the like) obtained by subtracting a predicted attribute (or attribute value) of each point from the attribute (attribute value) of each point. The quantization process is shown in Tables 2 and 3 below.

**[Table 2]**

| |
|---|
| int PCCQuantization(int value, int quantStep) { |
| if( value >=0) { |
| return floor(value / quantStep + 1.0 / 3.0); |
| } else { |
| return -floor(-value / quantStep + 1.0 / 3.0); |
| } |
| } |

**[Table 3]**

| |
|---|
| int PCCInverseQuantization(int value, int quantStep) { |
| if( quantStep ==0) { |
| return value; |
| } else { |
| return value * quantStep; |
| } |
| } |

When the predictor of each point has neighbor points, the point cloud encoder (e.g., the arithmetic encoder 30012) according to the embodiments may perform entropy coding on the quantized and inversely quantized residual values as described above.

When the predictor of each point has no neighbor point, the point cloud encoder according to the embodiments (e.g., the arithmetic encoder 30012) may perform entropy coding on the attributes of the corresponding point without performing the above-described operation. The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.
1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.
2) Lift prediction process: Subtract the value obtained by multiplying the attribute value of the point by the weight from the existing attribute value to calculate a predicted attribute value.
3) Create temporary arrays called updateweight and update and initialize the temporary arrays to zero.
4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.
5) Lift update process: Divide the attribute values of the update array for all predictors by the weight value of the updateweight array of the predictor index, and add the existing attribute value to the values obtained by the division.
6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, g_{l x,y,z} denotes the average attribute value of voxels at level l. g_{l x,y,z} may be calculated based on g_{l+1 2x,y,z} and g_{l+1 2x+1,y,z}. The weights for g_{l 2x,y,z} and gₗ are w1 = w_{l 2x,y,z} and w2 = g_{l 2x+1,y,z}.$\left⌈\begin{matrix}{g}_{l - {1}_{x , y , z}} \\ {h}_{l - {1}_{x , y , z}}\end{matrix}\right⌉ = {T}_{w 1 w 2} \left⌈\begin{matrix}{g}_{{l}_{2 x , y , z}} \\ {g}_{{l}_{2 x + 1 , y , z}}\end{matrix}\right⌉ , {T}_{w 1 w 2} = \frac{1}{\sqrt{w 1 + w 2}} \left[\begin{matrix}\sqrt{w 1} & \sqrt{w 2} \\ - \sqrt{w 2} & \sqrt{w 1}\end{matrix}\right]$

Here, *g*_{*l-*1 x,y,z} is a low-pass value and is used in the merging process at the next higher level. *h*_{*l-*1 *x,y,z*} denotes high-pass coefficients. The high.0000000000-pass coefficients at each step are quantized and subjected to entropy coding (e.g., encoding by the arithmetic encoder 30012). The weights are calculated as *w*_{*l*-1 x,y,z} = *wₗ* _{2x,y,z} + *wₗ* _{2*x*+1,y,z}. The root node is created through the *g*_{1 0,0,0} and *g*_{1 0,0,0} as follows.$\left⌈\begin{matrix}gDC \\ {h}_{{0}_{0 , 0 , 0}}\end{matrix}\right⌉ = {T}_{w 1000 w 1001} \left⌈\begin{matrix}{g}_{{1}_{0 , 0 , 0 z}} \\ {g}_{{1}_{0 , 0 , 1}}\end{matrix}\right⌉$

The value of gDC is also quantized and subjected to entropy coding like the high-pass coefficients.

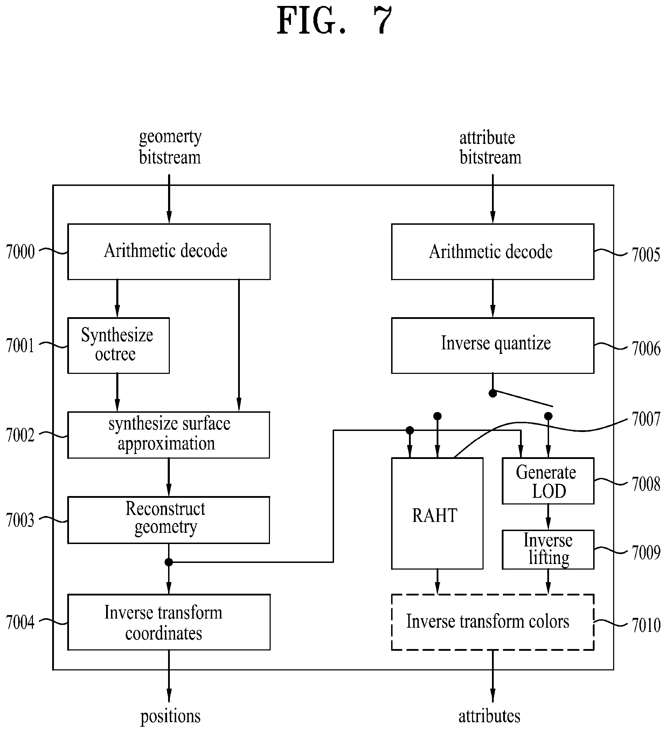

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

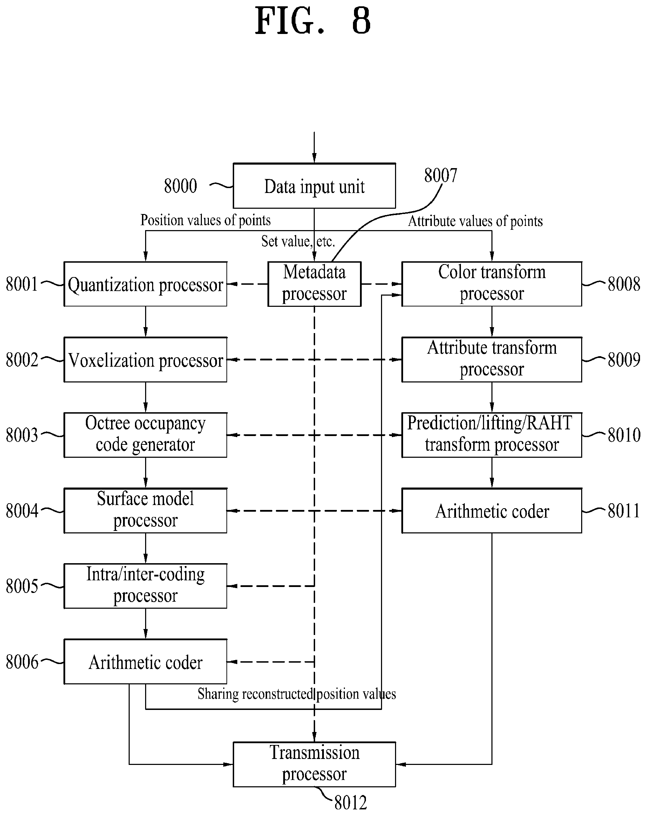

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquisition unit 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 30012.

The transmission processor 8012 according to the embodiments may transmit each bitstream containing encoded geometry and/or encoded attributes or metadata information, or transmit one bitstream containing the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom_tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

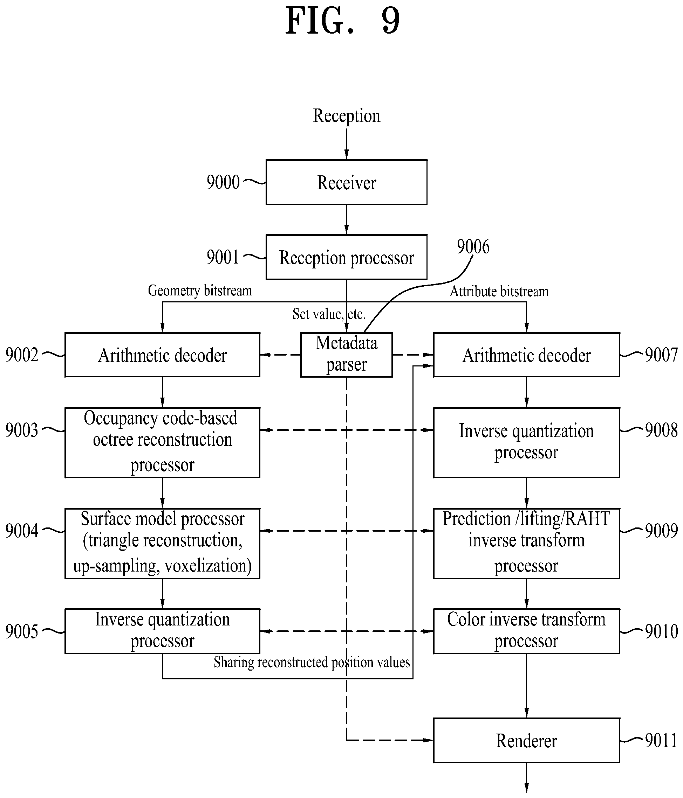

FIG. 9 illustrates a reception device according to embodiments.

The reception device illustrated in FIG. 9 is an example of the reception device 10004 of FIG. 1. The reception device illustrated in FIG. 9 may perform one or more of the operations and methods the same as or similar to those of the point cloud decoder described with reference to FIGS. 1 to 8.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 8, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus a detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to at least one of FIGS. 1 to 8, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009 of FIG. 7. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010 of FIG. 7. The renderer 9011 according to the embodiments may render the point cloud data.

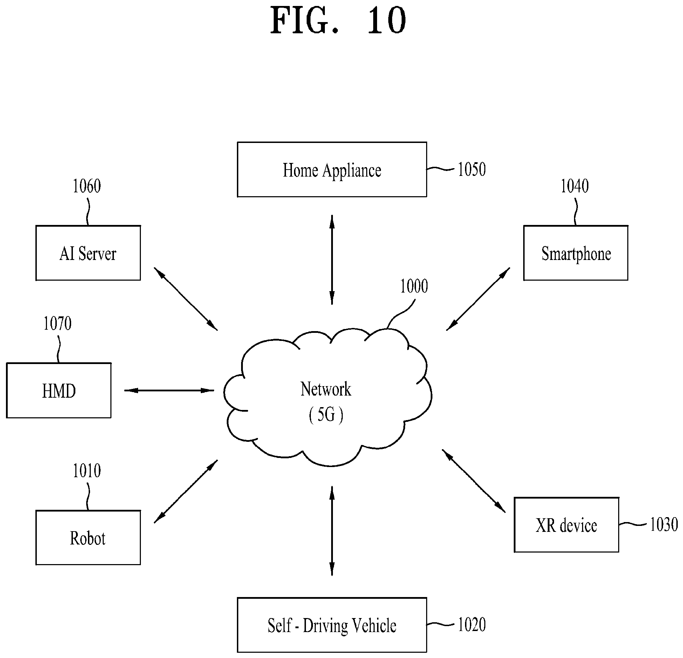

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

### <PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

### <PCC+XR+Mobile phone>

The XR/PCC device 1030 may be implemented as a mobile phone 1040 by applying PCC technology.

The mobile phone 1040 may decode and display point cloud content based on the PCC technology.

### <PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1020 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

As described above, a point cloud (or point cloud data) is composed of a set of points, and each point may have geometry information and attribute information. The geometry information is three-dimensional position (XYZ) information, and the attribute information includes color (RGB, YUV, etc.) and reflectance. In other words, the attribute information about each point may include at least one of color, reflectance, opacity, frame index, frame number, material identifier, or normal vector. For example, a point may have one attribute, color, or it may have two attributes, color and reflectance.

In the present disclosure, geometry information is used interchangeably with geometry data and geometry. Also, attribute information is used herein interchangeably with attribute data and attributes.

In the present disclosure, the point cloud content providing system may use one or more cameras (e.g., an infrared camera capable of securing depth information, an RGB camera capable of extracting color information corresponding to the depth information, etc.), a projector (e.g., an infrared pattern projector configured to secure depth information, etc.), LiDAR (Light Detection and Ranging), and the like to generate point cloud content (or point cloud data).

LiDAR refers to equipment configured to measure the distance by measuring the time it takes for the emitted light to reflect off a subject and return. It provides precise three-dimensional information about the real world as point cloud data over a wide area and long distance. Such large-volume point cloud data may be widely used in various fields employing computer vision technology, such as autonomous vehicles, robots, and 3D map production. That is, the LiDAR equipment uses a radar system configured to measure the coordinates of a position of a reflector by emitting a laser pulse and measuring the time it takes for the laser pulse to reflect on a subject (i.e., a reflector) in order to generate point cloud content. According to embodiments, the depth information may be extracted through the LiDAR equipment. The point cloud content generated through the LiDAR equipment may be composed of multiple frames. The multiple frames may be integrated into one piece of content.

Scenes captured as point clouds of the surroundings by using equipments for autonomous driving, such as LiDAR, may contain various aspects of the street, including roads, buildings, utility poles, vehicles(or cars), bicycles, people, and trash cans. For example, the scene also includes various states such as moving people, moving vehicles, stationary trash cans, buildings, and utility poles. That is, the scene refers to a state in which various objects and elements are gathered in a specific environment. In this case, the object may move like a vehicle, or may not move like a road or a building.

In the field of graphics that provides 3D rendering, such as in games, a scene graph or scene description is generated to depict these various scenes.

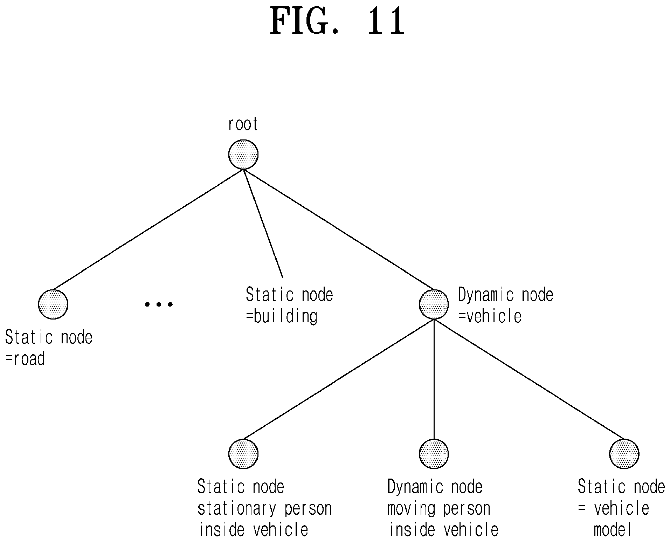

FIG. 11 is a diagram showing an example of a scene graph according to embodiments. As shown in FIG. 11, the scene graph has a hierarchical structure (i.e., a tree structure). For example, in the scene graph of FIG. 11, a road child node (or road node), a building child node (or building node), and a vehicle child node (or vehicle node) may be made (or generated) from a root node. That is, the scene graph may generate one or more child nodes from the root node. In this case, each child node may be set as a static node with no movement or a dynamic node with movement. For example, a road node and a building node may be set as a static node, and a vehicle node may be set as a moving node, that is, a dynamic node. For detailed animation of the vehicle, other child nodes (e.g., a stationary person inside the vehicle, a moving person inside the vehicle, a vehicle model, body, and wheels) may be generated with the vehicle node as a parent node. In an embodiment, when a main body and wheels are set as respective child nodes of the vehicle node and the wheel node is set as a node capable of specifying movement on its own, an animation may be configured in which the wheels rotate around a specific axis with the center of the wheel as the origin when the vehicle moves.

In this case, there are standards that may represent scene descriptions or scene graphs. For example, there may be gltf made by Khronos. Gltf enables efficient rendering of elements included in a scene. With regard to gltf as an example, a final node may be connected to a single 3D model file. That is, components constituting each node of the scene may be connected to a distinct 3D model file. For example, in FIG. 11, a road, which is a static node, may be connected to road.ply, and the vehicle model may be connected to a car.obj file. That is, the final node refers to a leaf node that no longer has child nodes, and the final node is connected to a 3D model file that is actually rendered or displayed on the screen.

However, for point cloud content for autonomous driving that requires low latency, construction of a scene with multiple files as shown in FIG. 11 is not meaningful. That is, a scene graph structure like that shown in FIG. 11 is unsuitable for real-time environments such as autonomous driving. Therefore, for street content captured from LiDAR equipment of a dynamically moving vehicle, especially for content used in real time, it is more efficient to provide a function for constructing a scene by compressing a point cloud rather than constructing the scene description or scene graph used in graphics.

In the case of autonomous driving, various types of equipment may be used in a complementary manner. For example, when three-dimensional points are constructed through LiDAR equipment and the position of each object is to be determined through two-dimensional image information, according to the present disclosure, position information of an object may be input to a point cloud (or point cloud data) constructed through LiDAR equipment and information that constitutes a scene by extending the concepts of LPU and PU may be added. In this case, G-PCC compression may be performed efficiently, and additional information may be provided to a renderer, allowing for an additional rendering change to be given to the renderer. The present disclosure may also be used efficiently for application-specific use cases.

In other words, the present disclosure is to support a method for representing a scene along with compression through an LPU and a PU to efficiently support compression of point cloud content captured through LiDAR equipment in a moving vehicle. In other words, the present disclosure proposes a method for constructing a scene through an LPU and a PU to increase the compression efficiency of G-PCC.

Hereinafter, a method of constructing and signaling a scene by extending an LPU and a PU will be described.

In the present disclosure, modifications and combinations between embodiments are possible. The terms used in the present disclosure may be understood based on their intended meanings within the scope of their widespread use in the relevant field. Scene representation through an LPU and a PU may be performed in a geometry encoder of a transmission device and transmitted to a geometry decoder of a reception device, and the scene may be restored through a decoding process in the geometry decoder.

According to the present disclosure, to represent a scene, points of the point cloud data may be partitioned into LPUs and/or PUs.

In more detail, according to the present disclosure, a road (or ground) and an object from point cloud data (or point cloud content or content) captured (or obtained) through LiDAR equipment may be separated, an LPU or a PU with the separated road points may be constructed, and the LPU or the PU with the separated object(s) points may be constructed. In this case, the point cloud data (or point cloud content) may be in the form of frames, tiles, or slices. In other words, point cloud content, frames, tiles, slices, and the like may be referred to as point cloud data. For example, a road and an object may be separated from slice-unit point cloud data, LPUs (or PUs) may be constructed from road points, and LPUs (or PUs) may be constructed from object points. In this case, the LPU including points of objects may be further partitioned into at least one LPU and/or at least one PU. In this case, the partition process may proceed until further LPU and/or PU partition is no longer needed or up to a specified level.

### Scene construction unit

The present disclosure may define an LPU and a PU to represent compression and a scene together in an encoder (e.g., a geometry encoder) of a transmission device.

In the present disclosure, a scene may be defined as a 2^{k} bounding box area with a minimum k value that includes the entire content. In this case, k of the 2^{k} bounding box containing content is a minimum value. The scene may include one or more LPUs and one or more PUs.

In the present disclosure, an LPU may be defined as a large group that may use the same coding tool by grouping points having the same characteristics or points with different characteristics into one. An LPU may be defined as a group of PUs.

In the present disclosure, a PU may be defined as a group of minimum points having the same characteristics. In other words, a road PU or an object PU may correspond to thereto.

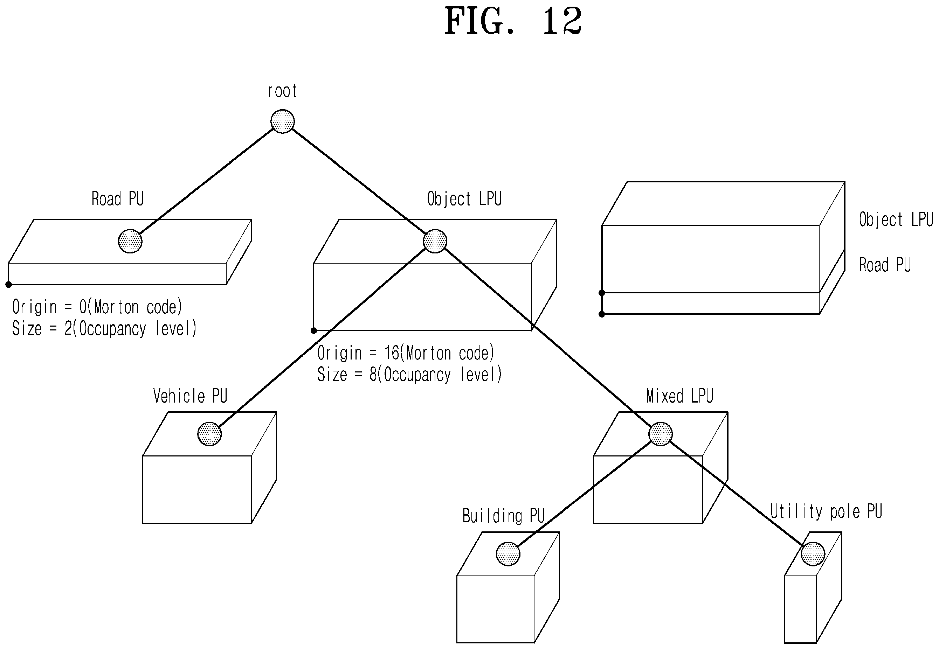

FIG. 12 is a diagram showing an example of a process unit constituting a scene according to embodiments. That is, FIG. 12 shows an example of a scene including LPUs and PUs.

Assuming that a route in the scene of FIG. 12 is point cloud data (or point cloud content or content) captured (or obtained) through LiDAR equipment, the route may include a road PU and an object LPU. That is, a road and an object may be separated from point cloud data (or point cloud content or content), a road PU may be formed from the separated road points, and an object LPU may be formed from the separated object(s) points. The object LPU may further partitioned into a vehicle PU and a mixed LPU, and the mixed LPU may be further partitioned into a building PU and a utility pole PU. In other words, the object LPU corresponds to a parent node (or upper node) of the vehicle PU and the mixed LPU, and the mixed LPU corresponds to a parent node (or upper node) of the building PU and the utility pole PU. Conversely, the vehicle PU and the mixed LPU correspond to child nodes of the object LPU, and the building PU and the utility pole PU correspond to child nodes of the mixed LPU.

In the present disclosure, an LPU and a PU may each have origin information and box size information.

According to embodiments, the origin information of a root may be defined as a Molton code value 0 of (0,0,0).

According to embodiments, the origin information of the LPU or the PU may be defined as the Molton code value of the left/right/front point. That is, the origin information of the LPU or the PU may be defined as a Molton code value based on the origin value of the parent node of the scene.

According to embodiments, information on the size of the LPU or PU (or box size or bounding box size) may be defined as a level of an occupancy tree.

For example, in FIG. 12, the origin information of the road PU is 0 (Molton code) and the size information is 2 (Occupancy level), and the origin information of the object LPU is 16 (Molton code) and the size information is 8 (Occupancy level).

In the present disclosure, each LPU and PU has an ID value. The LPU may have parent-child relationship information.

Each LPU and PU may have a type. For example, the characteristics of points in an area such as a ground, an object, a dynamic object, and a static object may be expressed.

In the present disclosure, for origin information, PUs belonging to the upper node may be aligned in Molton order, and a residual value of the origin information between PUs may be entropy-coded and transmitted to a reception device.

Scene construction may be partitioned according to geometry, and the attribute may follow the form constructed in the geometry.

In the present disclosure, the remaining range other than the ground PU range may be partitioned into an LPU that includes all objects. This LPU may be grouped again according to the characteristics of the content or position and may include LPUs or PUs.

In this case, the LPU may apply different coding tools. The LPU may include a plurality of PUs.

That is, in the present disclosure, a range other than the ground PU range may be defined as an object LPU. In other words, when points of point cloud data are divided into ground PUs and object LPUs, a range outside the ground PU range may be defined as an object LPU. This may mean that the ground is defined as a road PU. PUs may be grouped into object LPUs based on position. LPUs may be grouped according to a selection time and/or position and sub-partitioned into LPUs or PUs.

For example, the road PU in FIG. 12 corresponds to a ground PU. That is, for content captured through LiDAR equipment, the characteristics of ground points corresponding to roads or floors and the characteristics of points corresponding to objects may be significantly different. In this case, various ground PU construction methods may be provided. For example, an arbitrary point in content may be partitioned into a road through a z-axis dispersion information value and/or a z-axis specific threshold, or separated into a road by using a normal value of the point when a normal value is within a range of a vector such as the z-axis. As such, in the present disclosure, a ground PU may be partitioned in various ways. Different coding tools may be applied for respective PUs.

In the present disclosure, the object LPU may include object PUs. According to embodiments of the present disclosure, object PUs may be constructed while traversing bottom-up in an occupancy tree (or octree).

In the present disclosure, the object LPU and PU may be constructed in the following way.
- When an occupancy percentage (e.g., number of points) of a node is equal to or greater than a certain threshold, traversal may move to an upper level of an occupancy tree. This means that there are many points in the corresponding node, and in this case, there may be many points within the same object, and thus traversal moves to an upper level. That is, in an occupancy tree, two or more levels (e.g., child nodes and parent nodes) may be grouped from bottom to top and defined as a single PU (or LPU). As another example, at least one PU and at least one LPU may be defined at the same level.
- When an occupancy percentage at the upper level is equal to or greater than a certain threshold, traversal may move to the upper level of the occupancy tree again.
- When the occupancy percentage at the upper level is less than the threshold, all child nodes of the corresponding node may be defined as separate PUs, and the corresponding node may be defined as an object LPU.

Here, the threshold may be defined for each occupancy level (i.e., tree level) or defined as a single value and applied. For example, the object LPU of FIG. 12 may be constructed into a building PU, a utility pole PU, a vehicle PU, a mixed PU, and the like while traversing from bottom to top in an occupancy tree of the object LPU to estimate whether one or more nodes are to be grouped into the same object.

Different coding tools may be applied for respective PUs. A PU may define a semantic type value. For example, characteristics such as ground, dynamic objects, and static objects may be added.

As another embodiment of constituting the LPU and the PU, in the case of autonomous driving, various types of equipment may be used in a concept of assisting each other, as described above. For example, when three-dimensional points are to be constructed using LiDAR equipment and the position of each object is to be determined using two-dimensional image information, the position and size information of the object may be input into the point cloud constructed using LiDAR equipment, the corresponding area may be constructed into PUs, and the ID and characteristics transmitted through image processing may be applied to the PUs. When PUs are to be grouped by area, the PUs may be constructed as an LPU. For example, the object LPU of FIG. 12 may not have an estimation process and may include a building PU, a utility pole PU, a vehicle PU, and a mixed PU based on the origin information and size information of the object obtained through 2D image information.

Hereinafter, a point cloud transmission device to which the method of constructing a scene based on the LPU/PU described above is applied will be described.

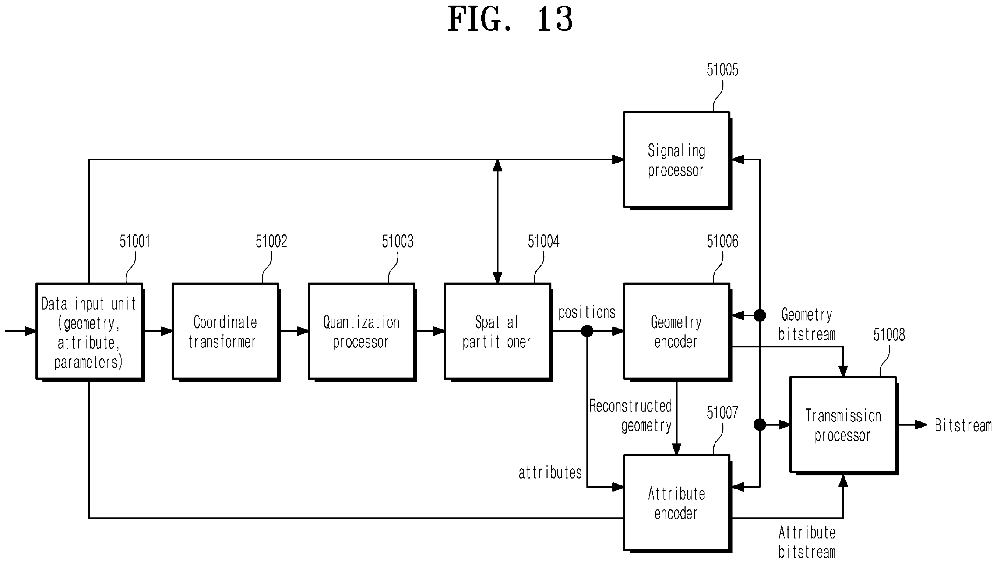

FIG. 13 is a diagram illustrating another exemplary point cloud transmission device according to embodiments.

The point cloud transmission device according to embodiments may include a data input unit 51001, a coordinate transformer 51002, a quantization processor 51003, a spatial partitioner 51004, a signaling processor 51005, a geometry encoder 51006, an attribute encoder 51007, and a transmission processor 51008. According to embodiments, the coordinate transformer 51002, the quantization processor 51003, the spatial partitioner 51004, the geometry encoder 51006, and the attribute encoder 51007 may be collectively referred to as a point cloud video encoder.

The point cloud transmission device of FIG. 13 may correspond to the transmission device 10000, the point cloud video encoder 10002, and the transmitter 10003 of FIG. 1, the acquisition-encoding-transmission 20000-20001-20002 of FIG. 2, the point cloud video encoder of FIG. 3, the transmission device of FIG. 8, or the device of FIG. 10. The elements of the point cloud transmission device illustrated in FIG. 13 may be implemented in hardware, software, a processor connected to a memory, and/or a combination thereof. That is, although not shown in the drawings, the elements may be implemented in hardware, software, firmware, or a combination thereof, including at least one processor or integrated circuit configured to communicate with at least one memory. The at least one processor may perform at least one of the operations and/or functions of the elements of the point cloud transmission device of FIG. 13. Further, the at least one processor may operate or execute a set of software programs and/or instructions to perform the operations and/or functions of the elements of the point cloud transmission device of FIG. 13.

The data input unit 51001 may perform some or all of the operations of the point cloud video acquisition unit 10001 of FIG. 1 or the data input unit 8000 of FIG. 8. The coordinate transformer 51002 may perform some or all of the operations of the coordinate transformer 30000 of FIG. 3. Additionally, the quantization processor 51003 may perform some or all of the operations of the quantizer 30001 of FIG. 3 or the quantization processor 8001 of FIG. 8. That is, the data input unit 51001 may receive data to encode point cloud data. The data may include geometry data (which may be referred to as geometry, geometry information, and so on), attribute data (which may be referred to as an attribute, attribute information, and so on), and parameter information indicating a coding-related configuration.

The coordinate transformer 51002 may support the transformation of a coordinate system for point cloud data, such as changing the xyz axes or transforming the coordinate system from an xyz Cartesian coordinate system to a spherical coordinate system.

The quantization processor 51003 may quantize the point cloud data. For example, it may adjust the scale by multiplying the x, y, and z values of the position of the point cloud data by the scale according to the scale (scale=geometry quantization value) setting. The scale value may follow the set value or be included in the bitstream as parameter information and delivered to the receiver.

The spatial partitioner 51004 may spatially partition the point cloud data quantized and output by the quantization processor 51003 into one or more 3D blocks based on a bounding box and/or a sub-bounding box. For example, the spatial partitioner 51004 may partition the quantized point cloud data into tiles or slices for region-by-region access or parallel processing of content. In one embodiment, the signaling information for spatial partition is entropy-encoded by the signaling processor 51005 and then transmitted through the transmission processor 51008 in the form of a bitstream.

In one embodiment, the point cloud content may be one person such as an actor, multiple people, one object, or multiple objects. In a broader sense, it may be a map for autonomous driving or a map for indoor navigation of a robot. Further, the point cloud content may be point cloud data captured by LiDAR equipment on a moving or stationary vehicle. In such cases, the point cloud content may be a vast amount of locally connected data. In this case, the point cloud content cannot be encoded/decoded at once, and accordingly tile partitioning may be performed before the point cloud content is compressed.

That is, a tile may represent a partial region (e.g., a rectangular cube) of a 3D space occupied by point cloud data according to embodiments. According to embodiments, a tile may include one or more slices. The tile according to the embodiments may be partitioned into one or more slices, and thus the point cloud video encoder may encode point cloud data in parallel.

A slice may represent a unit of data (or bitstream) that may be independently encoded by the point cloud video encoder according to the embodiments and/or a unit of data (or bitstream) that may be independently decoded by the point cloud video decoder. A slice may be a set of data in a 3D space occupied by point cloud data, or a set of some data among the point cloud data. A slice according to the embodiments may represent a region or set of points included in a tile according to embodiments. According to embodiments, a tile may be partitioned into one or more slices based on the number of points included in one tile. For example, one tile may be a set of points partitioned by the number of points. According to embodiments, a tile may be partitioned into one or more slices based on the number of points, and some data may be split or merged in the partitioning process. That is, a slice may be a unit that may be independently coded within a corresponding tile. In this way, a tile obtained by spatially partitioning may be partitioned into one or more slices for fast and efficient processing.

The point cloud video encoder according to the embodiments may encode point cloud data on a slice-by-slice basis or a tile-by-tile basis, wherein a tile includes one or more slices. In addition, the point cloud video encoder according to the embodiments may perform different quantization and/or transformation for each tile or each slice.

Positions of one or more 3D blocks (e.g., slices) spatially partitioned by the spatial partitioner 51004 are output to the geometry encoder 51006, and the attribute information (or attributes) is output to the attribute encoder 51007. The positions may be position information about the points included in a partitioned unit (box, block, tile, tile group, or slice), and are referred to as geometry information.

The geometry encoder 51006 outputs a geometry bitstream by performing inter-prediction or intra-prediction-based encoding on positions output from the spatial partitioner 51004. In this case, the geometry encoder 51006 may partition point cloud data (or point cloud content) in frame, tile, or slice units into LPUs and/or PUs by applying the LPU/PU partition method according to the present disclosure. That is, the geometry encoder 51006 may perform the LPU/PU partition(or segmentation)/integration process.

The geometry encoder 51006 may construct a scene from point cloud data in frames, tiles, or slices based on information indicating whether a scene is constructed (e.g., scene_description_enable_flag), and may signal information about the constructed scene to transmit the information to the decoder. In the present disclosure, the information indicating whether a scene is constructed (e.g., scene_description_enable_flag) may be referred to as scene construction status information.

To construct the scene, the geometry encoder 51006 may generate a ground PU through a ground threshold and construct the other area as an object LPU. For example, in the case of an object LPU, an object PU may be constructed through an object threshold while traversing the occupancy tree bottom-up, and when adjacent object PUs exist, these PUs may be grouped to construct an object LPU. As another example, the position (i.e., origin information) and size information of an object identified through image processing may be directly received to construct the ground PU, the object PU, and the object LPU.

The geometry encoder 51006 may construct a scene with one or more LPUs constructed as above and one or more PUs.

In this case, the geometry encoder 51006 and/or the signaling processor 51005 may signal the information indicating whether a scene is constructed (e.g., scene_description_enable_flag) and the scene construction information and transmit the signaled information to a decoder of the reception device. For example, ID information, position information, size information, characteristic (type) information, parent node information, threshold information, and applied coding tool information for identifying each LPU, PU, and/or object may be transmitted to the decoder of the reception device.

The geometry encoder 51006 may reconstruct the encoded geometry information and output the information to the attribute encoder 51007.

The attribute encoder 51007 encodes (i.e., compresses) the attributes (e.g., partitioned attribute original data) output from the spatial partitioner 51004 based on the reconstructed geometry output from the geometry encoder 51006 and outputs an attribute bitstream.

In the present disclosure, signaling may be performed in the geometry encoder 51006, the attribute encoder 51007, and/or the signaling processor 51005.

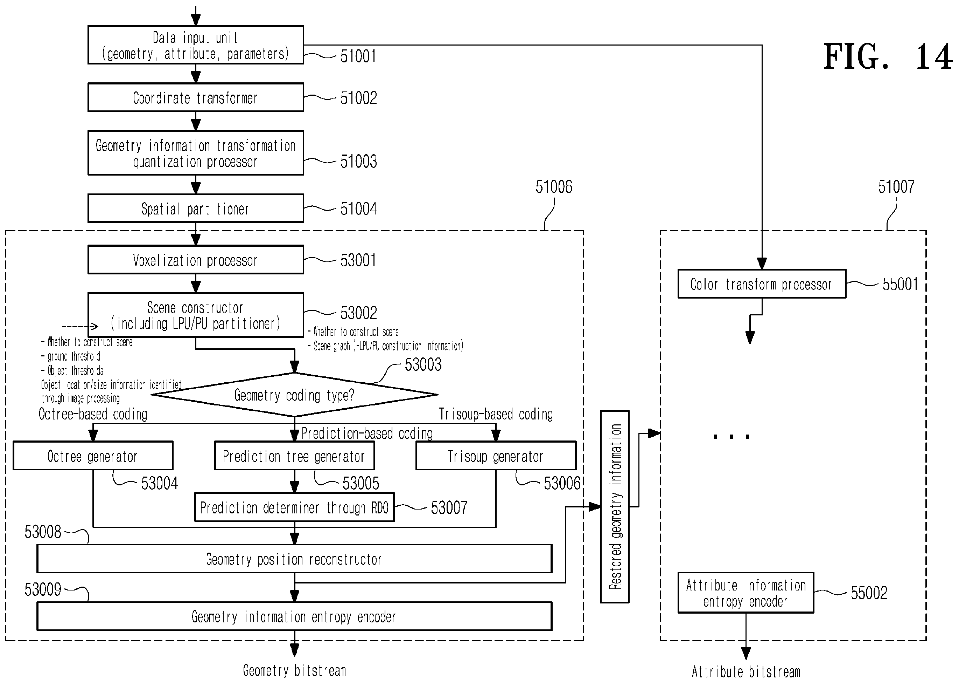

FIG. 14 is a diagram illustrating exemplary operations of the geometry encoder 51006 and the attribute encoder 51007 according to embodiments. The elements of FIG. 14 and the corresponding drawings may correspond to software, hardware, a processor connected to a memory, and/or a combination thereof. That is, although not shown in the drawings, the elements of the geometry encoder 51006 and the attribute encoder 51007 in FIG. 14 may be implemented in hardware, software, firmware, or a combination thereof, including at least one processor or integrated circuit configured to be capable of communicating with at least one memory. The at least one processor may perform at least one of the operations and/or functions of the elements of the geometry encoder 51006 and the attribute encoder 51007 of FIG. 14 described above. Additionally, the at least one processor may operate or execute a set of software programs and/or instructions for performing the operations and/or functions of the elements of the geometry encoder 51006 and the attribute encoder 51007 of FIG. 14.

In an embodiment, a quantization processor may be further provided between the spatial partitioner 51004 and a voxelization processor 53001. The quantization processor quantizes the positions of one or more 3D blocks (e.g., slices) spatially partitioned by the spatial partitioner 51004. In this case, the quantizer may perform some or all of the operations of the quantizer 30001 of FIG. 3 or the quantization processor 8001 of FIG. 8. When the quantization processor is further provided between the spatial partitioner 51004 and the voxelization processor 53001, the quantization processor 51003 of FIG. 13 may or may not be omitted.

The voxelization processor 53001 according to embodiments performs voxelization based on the positions or quantized positions of the spatially partitioned one or more 3D blocks (e.g., slices). A voxel refers to a minimum unit for representing position information in a 3D space. That is, the voxelization processor 53001 may support a process of rounding the geometry position values of scaled points into integers. The points of point cloud content (or a 3D point cloud video) may be included in one or more voxels. According to embodiments, one voxel may include one or more points. In an embodiment, when quantization is performed before voxelization, it may occur that a plurality of points belong to one voxel.

In the present disclosure, when two or more points are included in one voxel, these points are referred to as overlapping points (or duplicated points). That is, overlapping points may be generated through geometry quantization and voxelization during the geometry encoding process.

The voxelization processor 53001 according to embodiments may output overlapping points belonging to one voxel as they are without merging them, or it may merge the overlapping points into a single point and output the single point.

According to embodiments, points partition into tiles or slices or points in frame units in the spatial partitioner 51004 may be voxelized by the voxelization processor 53001, the voxelized points may be partition into one or more LPUs and/or PUs in a scene constructor 53002, and a scene may be constructed based on the partitioned one or more LPUs and/or PUs. To this end, the scene constructor 53002 may include an LPU/PU partition unit. For example, the voxelized points in the voxelization processor 53001 may be partitioned into a ground PU and/or an object LPU in the scene constructor 53002, and the object LPU may be partitioned into one or more LPUs and/or PUs.

The scene constructor 53002 may partition points of point cloud data in frame, tile, or slice units into one or more LPUs and/or one or more PUs based on information indicating whether a scene is constructed (e.g., scene_description_enable_flag), construct a scene with the partitioned one or more LPUs and/or one or more PUs, and signal information regarding the constructed scene and transmit the information to the decoder.

In more detail, to construct the scene, the scene constructor 53002 may generate a ground PU through a ground threshold and construct the other area as an object LPU. For example, in the case of an object LPU, the scene constructor 53002 may construct an object PU through an object threshold while traversing the occupancy tree bottom-up, and when adjacent object PUs exist, the scene constructor 53002 may group these PUs to construct an object LPU. As another example, the scene constructor 53002 may directly receive the position (i.e., origin information) and size information of an object identified through image processing to construct the ground PU, the object PU, and the object LPU.

To this end, the scene constructor 53002 may receive the information indicating whether a scene is constructed. The scene constructor 53002 may receive ground threshold information, object threshold information, and/or object position/size information identified through image processing for LPU/PU partition.

The scene constructor 53002 may construct a scene with one or more LPUs constructed as above and one or more PUs.

In this case, the information indicating whether a scene is constructed (e.g., scene_description_enable_flag) and the scene construction information may be transmitted to the decoder of the reception device. For example, scene construction information may include identification information for identifying each LPU and PU (e.g., LPU[].id, PU[].id), position information (e.g., LPU[].origin, PU[i].origin), size information (e.g., LPU[].size, PU[].size), characteristic (type) information (e.g., PU[].type), parent node information (e.g., PU[].parentID), threshold information (e.g., ground_threshold object_threshold), and applied coding tool information (e.g., PU[].codingtool), and such scene construction information may be transmitted to the decoder of the reception device. In the present disclosure, the information indicating whether a scene is constructed and the scene construction information may be collectively scene construction related information. In the present disclosure, the scene construction information may refer to a scene graph information or scene description information. The scene construction information may further include LPU/PU construction information.

In FIG. 14, reference numeral 53003 may be referred to as a determiner that checks whether the output of the scene constructor 53002 is encoded based on an octree, a prediction tree, or a trisoup. The determiner 53003 may check this by using signaling information or may check based on a preset method.

When this is checked using the octree-based construction method, an octree generator 53004 generates an octree based on the position information (i.e., geometry information) of the points output from the scene constructor 53002, and compresses the geometry information based on the octree. When this is checked using a trisoup based compression method, a trisoup generator 53006 generates a trisoup based on the position information (i.e., geometry information) of points output from the scene constructor 53002, and compresses the geometry information based on the trisoup.

When this is checked using a prediction tree-based compression method, a prediction tree generator 53005 generates a prediction tree based on position information (i.e., geometry information) of points output from the scene constructor 53002, and performs intra prediction or inter prediction based on the prediction tree to generate at least one of a plurality of intra prediction modes and/or a plurality of inter prediction modes, and a prediction position value (or predicted position information) for each mode is output to a prediction determiner 53007.

The prediction determiner 53007 may select an optimal prediction mode by performing an RDO process based on a prediction position value calculated based on one or more of the plurality of intra prediction modes and/or plurality of inter prediction modes generated by the prediction tree generator 53005, that is, a prediction position value for each prediction mode of intra and inter.

A geometry position reconstructor 53008 according to embodiments restores (or reconstructs) geometry information based on positions changed through an octree generator 53004, the prediction determiner 53007, or the trisoup generator 53006, and outputs the restored geometry information (or restored geometry) to the attribute encoder 51007. In other words, attribute information depends on geometry information (location), and thus restored (or reconstructed) geometry information is required to compress attribute information.

A geometry information entropy encoder 53009 according to embodiments may perform entropy encoding on the compressed geometry information to construct a geometry information bitstream. In the present disclosure, for origin information, PUs belonging to the upper node may be aligned in Molton order, and a residual value of the origin information between PUs may be entropy-coded by the geometry information entropy encoder 53009 and transmitted to a reception device.

A color transform processor 55001 of the attribute encoder 51007 corresponds to the color transformer 30006 of FIG. 3 or the color transform processor 8008 of FIG. 8. The color transform processor 55001 according to embodiments performs color transform coding that transforms a color value (or texture) included in attributes provided by the data input unit 51001 and/or the space partitioner 51004. For example, the color transform processor 55001 may transform a format of color information (e.g., transform from RGB to YCbCr). The operation of the color transform processor 55001 according to embodiments may be optionally applied depending on a color value included in the attributes. In another embodiment, the color transform processor 55001 may perform color transform coding based on the reconstructed geometry. The following description is omitted here and refers to the description in FIG. 3 and/or FIG. 8.

An attribute information entropy encoder 55002 according to embodiments performs entropy encoding on compressed attribute information and outputs an attribute bitstream (or attribute information bitstream).

The geometry bitstream compressed and output from the geometry encoder 51006 and the attribute bitstream compressed and output from the attribute encoder 51007 are output to the transmission processor 51008.

The transmission processor 51008 according to embodiments may perform the same or similar operation and/or transmission method as the transmission processor 8012 of FIG. 8, or may perform the same or similar operation and/or transmission method as the transmission method as the transmitter 10003 of FIG. 1. A detailed description is omitted here and refers to the description in FIG. 1 or FIG. 8.

The transmission processor 51008 according to embodiments may separately transmit the geometry bitstream output from the geometry encoder 51006, the attribute bitstream output from the attribute encoder 51007, and the signaling bitstream output from the signaling processor 51005 or may multiplex and transmit the bitstreams into a single bitstream.

The transmission processor 51008 according to embodiments may encapsulate the bitstream into a file or a segment (e.g., a streaming segment) and then transmit the bitstream through various networks such as a broadcast network and/or a broadband network.

The signaling processor 51005 according to embodiments may generate and/or process signaling information and output the signaling information to the transmission processor 51008 in the form of a bitstream. The signaling information generated and/or processed by the signaling processor 51005 may be provided to the geometry encoder 51006, the attribute encoder 51007, and/or the transmission processor 51008 for geometry encoding, attribute encoding, and transmission processing, or the signaling processor 51005 may receive signaling information generated by the geometry encoder 51006, the attribute encoder 51007, and/or the transmission processor 51008.

In the present disclosure, signaling information may be signaled and transmitted in units of parameter sets (SPS, GPS, APS, TPS, and the like). The signaling information may be signaled and transmitted in units of coding units for each image, such as a slice or a tile. In the present disclosure, the signaling information may include metadata regarding point cloud data (e.g., setting values) and may be provided to the geometry encoder 51006, the attribute encoder 51007, and/or the transmission processor 51008 for geometry encoding, attribute encoding, and transmission processing. Depending on an application, the signaling information may be defined at a system level, such as a file format, DASH, or MMT, or at a wired interface level, such as HDMI, Display Port, VESA, or CTA.

The method/device according to embodiments may signal related information to add/perform an operation according to embodiments. The signaling information according to embodiments may be used in a transmission device and/or a reception device.

In the present disclosure, part or all of the information indicating whether a scene is constructed or the scene construction information may be signaled to at least one of an SPS, TPS, GPS and/or geometry header for each slice. In the present disclosure, the information indicating whether a scene is constructed or the scene construction information may be referred to as parameter information for scene construction.

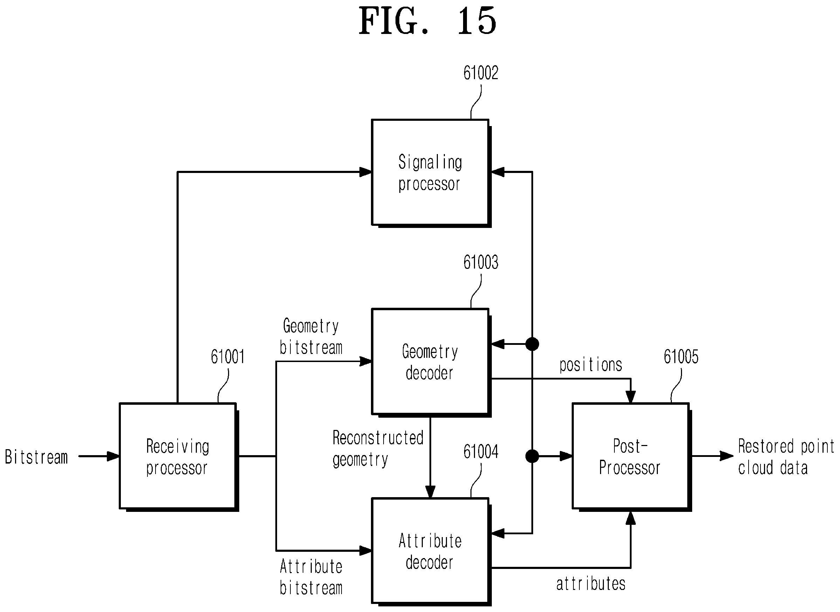

FIG. 15 is a diagram showing another example of a point cloud reception device according to embodiments.

The point cloud reception device according to embodiments may include a receiving processor 61001, a signaling processor 61002, a geometry decoder 61003, an attribute decoder 61004, and a post-processor 61005. According to embodiments, the geometry decoder 61003 and the attribute decoder 61004 may be referred to as point cloud video decoders. According to embodiments, the point cloud video decoder may be referred to as a PCC decoder, a PCC decoding unit, a point cloud decoder, a point cloud decoding unit, or the like.

The point cloud reception device of FIG. 15 may correspond to the reception device 10004 of FIG. 1, the receiver 10005, the point cloud video decoder 10006, the transmission-decoding-rendering 20002-20003-20004 of FIG. 2, the point cloud video decoder of FIG. 7, the reception device of FIG. 9, or the device of FIG. 10. The elements of FIG. 15 and the corresponding diagrams may correspond to software, hardware, a processor connected to memory, and/or a combination thereof. That is, the elements of the point cloud receiving device of FIG. 15 may be implemented with hardware, software, firmware, or a combination thereof, including one or more processors or integrated circuits configured to communicate with one or more memories, although not shown in the diagrams. One or more processors may perform at least one of the operations and/or functions of the elements of the point cloud receiving device of FIG. 15 described above. One or more processors may operate or execute a set of software programs and/or instructions for performing operations and/or functions of the elements of the point cloud receiving device of FIG. 15.

The receiving processor 61001 according to embodiments may receive a single bitstream, or may separately receive a geometry bitstream (or geometry information bitstream), an attribute bitstream (or attribute information bitstream), and a signaling bitstream. The receiving processor 61001 according to embodiments may decapsulate the received file and/or segment and output the file and/or the segment in a bitstream when the file and/or the segment is received.

The receiving processor 61001 according to embodiments may, when one bitstream is received (or decapsulated), demultiplex a geometry bitstream, an attribute bitstream, and/or a signaling bitstream from the one bitstream, and output the demultiplexed signaling bitstream to the signaling processor 61002, the geometry bitstream to the geometry decoder 61003, and the attribute bitstream to the attribute decoder 61004.

According to embodiments, when receiving (or decapsulating) the geometry bitstream, the attribute bitstream, and/or the signaling bitstream, the receiving processor 61001 may transfer the signaling bitstream to the signaling processor 61002, the geometry bitstream to the geometry decoder 61003, and the attribute bitstream to the attribute decoder 61004.

The signaling processor 61002 may parse and process signaling information, for example, SPS, GPS, APS, TPS, or information included in metadata, from an input signaling bitstream and provide the information to the geometry decoder 61003, the attribute decoder 61004, and the post-processor 61005. In another embodiment, signaling information included in the geometry slice header and/or the attribute slice header may also be parsed in advance in the signaling processor 61002 before decoding the slice data. That is, when point cloud data is partitioned into tiles and/or slices at a transmitting side, the TPS includes the number of slices included in each tile, and thus the point cloud video decoder according to embodiments may determine the number of slices and rapidly parse information for parallel decoding.

Accordingly, the point cloud video decoder according to the present disclosure may rapidly parse a bitstream including point cloud data by receiving an SPS with a reduced amount of data. The reception device may perform decoding of the corresponding tiles when receiving the tiles, and may maximize decoding efficiency by performing decoding on a slice-by-slice basis based on the GPS and APS included within the tile. Alternatively, the reception device may maximize decoding efficiency by performing decoding of geometry information by constructing the scene based on the information indicating whether a scene is constructed and the scene construction information that are signaled in the SPS, GPS, TPS, and geometry slice headers.

That is, the geometry decoder 61003 may restore the geometry by performing an inverse process of the geometry encoder 51006 of FIG. 13 based on signaling information (e.g., geometry-related parameters) for the compressed geometry bitstream. The geometry restored (or reconstructed) in the geometry decoder 61003 is provided to the attribute decoder 61004.

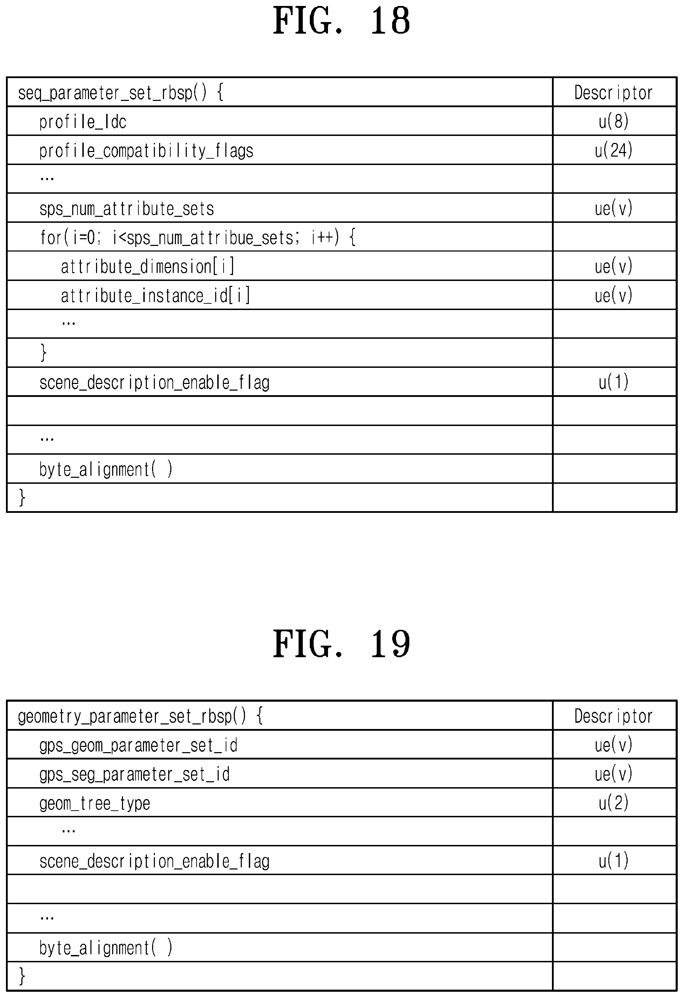

According to embodiments, the geometry decoder 61003 may parse and restore the information indicating whether a scene is constructed and the scene construction information included in the signaling information, and may restore LPUs/PUs based on the restored information to reconstruct the scene. According to embodiments, the geometry decoder 61003 reconstructs the scene by restoring the LPUs/PUs when the information indicating whether a scene is constructed indicates that the scene is constructed. According to embodiments, the reconstructed scene may be used for rendering in LPU/PU units. In the present disclosure, the scene construction information may be referred to as scene graph information or scene description information, and may include identification information of each LPU/PU (e.g., LPU[].id, PU[].id), position information (e.g., LPU[].origin, PU[i].origin), size information (e.g., LPU[].size, PU[].size), attribute (type) information (e.g., PU[].type), parent node information (e.g., PU[].parentID), threshold information (e.g., ground_threshold object_threshold), and applied coding tool information (e.g., PU[].codingtool). In the present disclosure, the information indicating whether a scene is constructed may be referred to as scene construction status information. Information included in the scene construction information in the present disclosure may be added, deleted, or modified by those of skill in the art, and thus the present disclosure is not limited to the examples described above. The information indicating whether a scene is constructed and the scene construction information will be described in detail below with reference to FIGS. 18 to 21.

The attribute decoder 61004 may restore attributes by performing an inverse process of the attribute encoder 51007 of FIG. 13 based on signaling information (e.g., attribute-related parameters) and reconstructed geometry for the compressed attribute bitstream.

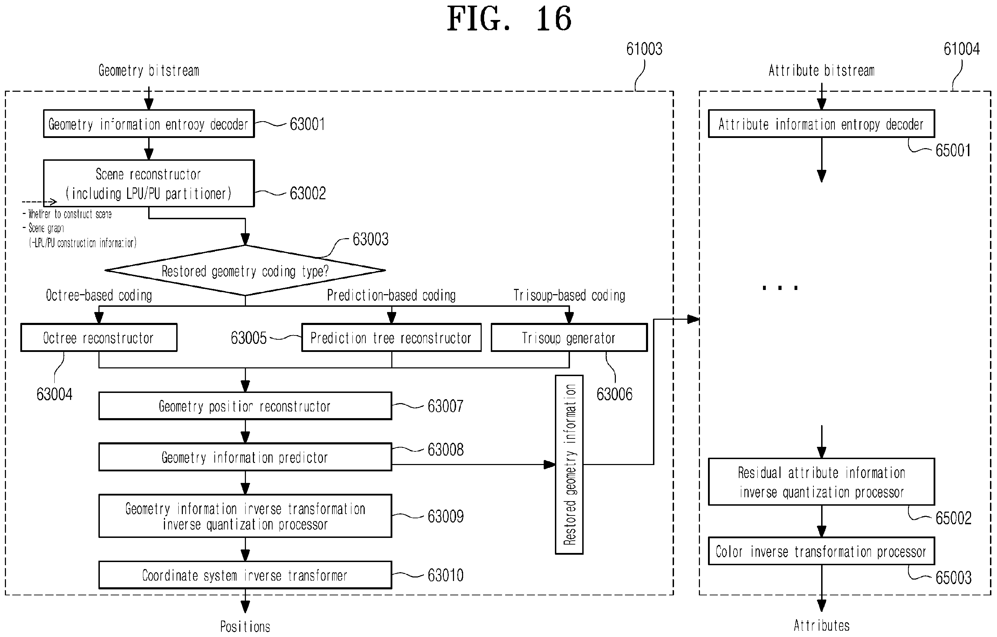

FIG. 16 is a diagram showing an example of operations of the geometry decoder 61003 and the attribute decoder 61004 according to embodiments. The elements of FIG. 16 and the corresponding diagrams may correspond to software, hardware, a processor connected to memory, and/or a combination thereof. That is, the elements of the geometry decoder 61003 and the attribute decoder 61004 of FIG. 16 may be implemented in hardware, software, firmware, or a combination thereof, including one or more processors or integrated circuits configured to communicate with one or more memories, although not shown in the diagrams. One or more processors may perform at least one of the operations and/or functions of the elements of the geometry decoder 61003 and/or the attribute decoder 61004 of FIG. 16 described above. One or more processors may operate or execute a set of software programs and/or instructions for performing operations and/or functions of the elements of the geometry decoder 61003 and the attribute decoder 61004 of FIG. 16.

A geometry information entropy decoder 63001 included in the geometry decoder 61003 of FIG. 16 may perform part or all of the operation of the arithmetic decoder 11000 of FIG. 7, or may perform part or all of the operation of the arithmetic decoder 9002 of FIG. 9. That is, the geometry information entropy decoder 63001 may entropy-decodes the input geometry bitstream. The geometry information entropy decoder 63001 may additionally entropy-decode a residual value of origin information between PUs.

According to embodiments, when the information indicating whether a scene is constructed and the scene construction information are signaled in at least one of a sequence parameter set (SPS), a geometry parameter set (GPS), a tile parameter set (TPS), and/or a geometry slice header, the signaling processor 61002 may obtain the information and provide the information to the geometry decoder 61003, or the geometry decoder 61003 may obtain the information directly.

According to embodiments, a scene reconstructor 63002 may reconstruct the scene by applying the information indicating whether a scene is constructed and the scene construction information, which is included in the signaling information, and the scene composition information, to restore LPUs/PUs from the entropy-decoded geometry information. According to embodiments, the scene reconstructor 63002 reconstructs the scene by restoring the LPUs/PUs when the information indicating whether a scene is constructed indicates that the scene is constructed. According to embodiments, the reconstructed scene may be used for rendering in LPU/PU units. In the present disclosure, the scene construction information may be referred to as scene graph information, scene description information, or LPU/PU construction information, and may include identification information (ID), position information, size information, characteristic (type) information, parent node information, threshold information, and applied coding tool information of each LPU/PU.

According to embodiments, when octree-based encoding is applied to geometry information at a transmitting side, an octree reconstructor 63004 performs octree-based restoration on the geometry information output from the scene reconstructor 63002. Conversely, when prediction-based encoding is applied to geometry information at the transmitting side, a prediction tree reconstructor 63005 performs prediction-based restoration on the geometry information output from the scene reconstructor 63002. When trisoup-based encoding is applied to geometry information at the transmitting side, a trisoup generator 63006 performs trisoup-based restoration on the geometry information output from the scene reconstructor 63002.

To this end, reference numeral 63003 (or determiner) checks whether octree-based coding, prediction-based coding, or trisoup-based coding has been applied to the geometry information.

The geometry information restored in the octree reconstructor 63004, the prediction tree reconstructor 63005, or the trisoup generator 63006 is output to a geometry position reconstructor 63007 to reconstruct the position of the geometry information.

The output of the geometry position reconstructor 63007 is input to a geometry information inverse transformation inverse quantization processor 63009 through a geometry information predictor 63008.

The geometry information inverse transformation inverse quantization processor 63009 may perform an inverse process of the transformation performed by the geometry information transformation quantization processor 51003 of the transmission device on the geometry information in which the position has been reconstructed, and multiply the result by a scale (=geometry quantization value) to generate restored geometry information in which inverse quantization has been performed. That is, the geometry information inverse transformation inverse quantization processor 63009 may perform inverse quantization of geometry information by applying a scale (scale = geometry quantization value) included in the signaling information to the geometry position x, y, and z values of the restored point.

The coordinate system inverse transformer 63010 may perform an inverse process of the coordinate system transformation performed by the coordinate transformer 51002 of the transmission device on the inversely quantized geometry information. For example, the coordinate system inverse transformer 63010 restores the xyz axes changed at the transmitting side or inversely transforms the transformed coordinate system into an xyz orthogonal coordinate system and outputs the result to the post-processor 61005 of FIG. 15.

According to embodiments, the geometry information output from the geometry information predictor 63008 is output to the attribute decoder 61004 after a geometry restoration process is performed.

According to embodiments, an attribute information entropy decoder 65001 of the attribute decoder 61004 may entropy-decode residual information included in the input attribute bitstream. The following description is omitted here and refers to the description in FIG. 7 and/or FIG. 9.

According to embodiments, the restored attribute information may be provided to a color inverse transformation processor 65003 via an attribute information inverse quantization processor 65002 to be restored to RGB color. That is, the color inverse transformation processor 65003 performs inverse transformation coding to inversely transform a color value (or texture) included in the restored attribute information and outputs the result to the post-processor 61005 of FIG. 15.

The post-processor 61005 may reconstruct point cloud data by matching geometry information (i.e., positions) restored and output from the geometry decoder 61003 with attribute information restored and output from the attribute decoder 61004. The post-processor 61005 may perform an inverse process of spatial partition of the transmitting side based on signaling information when the reconstructed point cloud data is in tile and/or slice units.

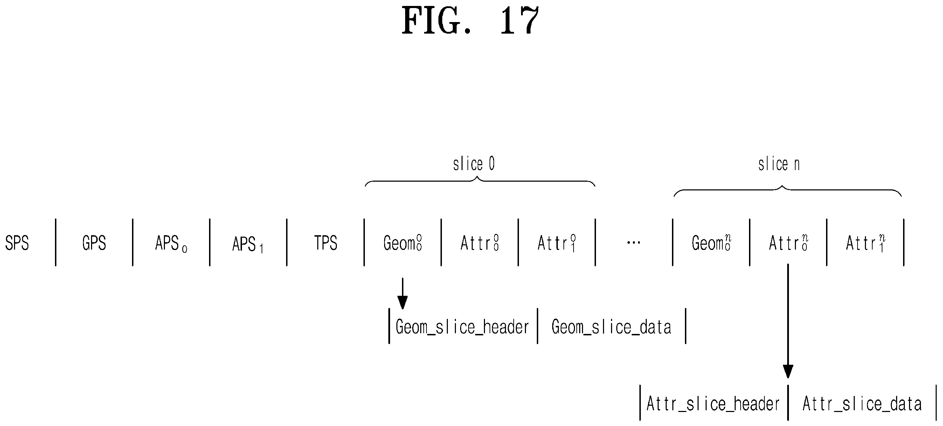

FIG. 17 illustrates an example bitstream structure of point cloud data for transmission/reception according to embodiments.

In order to add/perform the embodiments described so far, related information may be signaled. The signaling information according to the embodiments may be used by a point cloud video encoder at the transmitting side or a point cloud video decoder at the receiving side.

The point cloud video encoder according to the embodiments may generate a bitstream as shown in FIG. 17 by encoding geometry information and attribute information as described above. In addition, signaling information related to the point cloud data may be generated and processed by at least one of the geometry encoder, the attribute encoder, or the signaling processor of the point cloud video encoder, and may be included in the bitstream.

The signaling information according to the embodiments may be received/acquired by at least one of the geometry decoder, the attribute decoder, or the signaling processor of the point cloud video decoder.

A bitstream according to embodiments may be divided into a geometry bitstream, an attribute bitstream, and a signaling bitstream to be transmitted/received, or one combined bitstream may be transmitted/received.

When a geometry bitstream, an attribute bitstream, and a signaling bitstream according to embodiments are configured in one bitstream, the bitstream may include one or more sub-bitstreams. The bitstream according to the embodiments may include a sequence parameter set (SPS) for sequence level signaling, a geometry parameter set (GPS) for signaling of geometry information coding, one or more attribute parameter sets (APSs) (APS₀, APS₁) for signaling of attribute information coding, a tile parameter set (TPS) for tile level signaling, and one or more slices (slice 0 to slice n). That is, a bitstream of point cloud data according to the embodiments may include one or more tiles, wherein each of the tiles may be a group of slices including one or more slices (slice 0 to slice n). The TPS according to the embodiments may contain information about each of the one or more tiles (e.g., coordinate value information and height/size information about the bounding box). Each slice may include one geometry bitstream (Geom0) and one or more attribute bitstreams (Attr0 and Attr1). For example, a first slice (slice 0) may include one geometry bitstream (Geom0⁰) and one or more attribute bitstreams (Attr0⁰, Attr1⁰).

The geometry bitstream within in each slice (also referred to as a geometry slice) may include a geometry slice header (geom_slice_header) and geometry slice data (geom_slice_data). In some embodiments, the geometry bitstream within each slice is referred to as a geometry data unit, the geometry slice header is referred to as a geometry data unit header, and the geometry slice data is referred to as geometry data unit data.

Each attribute bitstream (or attribute slice) within each slice may include an attribute slice header (attr_slice_header) and attribute slice data (attr_slice_data). In some embodiments, the attribute bitstream within each slice may be referred to as an attribute data unit, the attribute slice header may be referred to as an attribute data unit header, and the attribute slice data may be referred to as attribute data unit data.

The transmission device according to the embodiments may transmit the point cloud data according to the bitstream structure as shown in FIG. 17. Thus, different encoding operations may be applied according to the importance level and a good-quality encoding method may be used for an important region. In addition, efficient encoding and transmission according to the characteristics of the point cloud data may be supported and attribute values may be provided according to user requirements.

As the reception device according to the embodiments may receive the point cloud data according to the bitstream structure as shown in FIG. 17. Accordingly, different filtering (decoding method) may be applied to the respective regions (divided into tiles or slices) according to the processing capacity of the reception device, rather than applying a complex decoding (filtering) method to the entire point cloud data. Thereby, a better image quality may be provided for regions important to the user and appropriate latency may be ensured in the system.

As described above, tiles or slices are provided to process the point cloud data by partitioning the point cloud data into regions. In partitioning the point cloud data into regions, an option to generate a different set of neighbor points for each region may be configured. Thereby, a selection method having low complexity and slightly lower reliability, or a selection method having high complexity and high reliability may be provided.

According to embodiments, at least one of the SPS, TPS, GPS, and geometry slice header may include the information indicating whether a scene is constructed and the scene construction information. According to embodiments, at least one of SPS, TPS, and GPS includes the information indicating whether a scene is constructed, and the geometry slice header may include the information indicating whether a scene is constructed and the scene construction information.

That is, depending on where the signal (e.g., information indicating whether a scene is constructed and scene construction information) is transferred, the signal may have different meanings. When the signal is defined in SPS, the signaling may be applied equally to the entire sequence, when the signal is defined in GPS, the signaling may indicate that the signal is applied to geometry restoration, when the signal is defined in TPS, the signaling may indicate that the signaling is applied only to points within a tile, and when the signal is transferred in slice units, the signal may indicate that the signaling is applied only to the corresponding slice. When fields defined below (or referred to as syntax elements) are applied to a plurality of point cloud data streams as well as the current point cloud data stream, the fields may be transferred through a higher-level concept parameter set, or the like.

The term "field," as used in the syntax of this specification described below, may have the same meaning as "parameter" or "element."

FIG. 18 is a diagram showing an example of a syntax structure of a sequence parameter set (SPS) according to the present specification. The SPS may include sequence information of a point cloud data bitstream, and in particular, an example is shown that includes information indicating whether a scene is constructed (scene_description_enable_flag).

In FIG. 18, a profile_idc field indicates a profile that the bitstream follows.

When a value of a profile_compatibility_flags field is 1, this may indicate that the bitstream follows the profile indicated by the profile_idc field.

A level_idc field indicates a level that the bitstream follows.

A sps_seq_parameter_set_id field provides an identifier for an SPS that is referenced by other syntax elements.

A sps_num_attribute_sets field indicates the number of encoded attributes within the bitstream.

The SPS according to embodiments includes a loop that repeats as many times as a value of the sps_num_attribute_sets field. In this case, i is initialized to 0 and increases by 1 each time the loop is executed, and the loop is repeated until the value of i becomes the value of the sps_num_attribute_sets field. The loop may include fields such as attribute_dimension[i], or attribute_instance_id[i].

The attribute_dimension[i] field indicates the number of components of i-th attribute.

The attribute_instance_id[i] field indicates an instance identifier of the i-th attribute.

The SPS according to embodiments may further include a scene_description_enable_flag field. The scene_description_enable_flag field specifies whether a scene is constructed in the corresponding sequence. That is, this indicates whether scene construction is applied to the corresponding sequence. The present disclosure provides, as an example, that when a value of the scene_description_enable_flag field is 1, scene construction is applied to the corresponding sequence, and when the value is 0, the scene is not applied.

FIG. 19 is a diagram showing an example of a syntax structure of a geometry parameter set (APS) according to the present specification. A GPS according to embodiments may include information regarding a method of encoding geometry information of point cloud data included in one or more slices, and in particular, shows an example including information indicating whether a scene is constructed. That is, during the geometry information encoding/decoding process, the information indicating whether a scene is constructed may be added to the GPS and signaled.

In FIG. 19, the gps_geom_parameter_set_id field represents a GPS identifier for reference by other syntax elements.

A gps_seq_parameter_set_id field represents a value of sps_seq_parameter_set_id for an active SPS.

The geom_tree_type field indicates a coding type for geometry.

In an embodiment, when a value of the geom_tree_type field is 0, this may indicate that geometry is coded using an occupancy tree (or octree), and when the value is 1, this may indicate that the geometry is coded using a prediction tree.

According to embodiments, the GPS may further include a scene_description_enable_flag field. The scene_description_enable_flag field specifies whether a scene is constructed in the corresponding frame. That is, this indicates whether scene construction is applied to the corresponding frame. The present disclosure provides, as an example, that when a value of the scene_description_enable_flag field is 1, scene construction is applied to the corresponding frame, and when the value is 0, the scene is not applied.

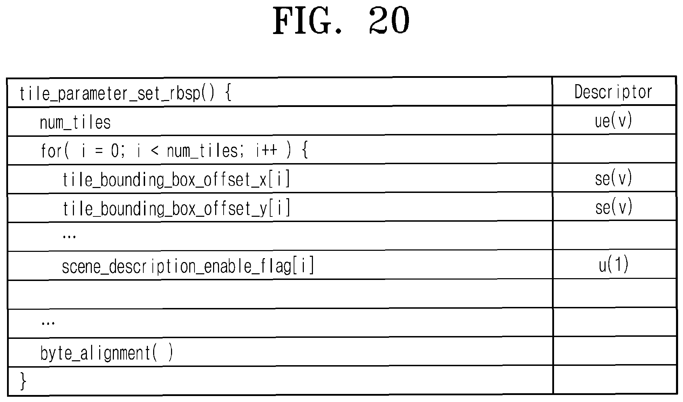

FIG. 20 is a diagram showing an embodiment of a syntax structure of a tile parameter set (TPS) according to the present disclosure. In some embodiments, the TPS may be referred to as a tile inventory. The TPS according to embodiments includes information related to each tile for each tile, and in particular, shows an example including information indicating whether a scene is constructed.

The TPS according to embodiments includes a num_tiles field.

The num_tiles field indicates the number of tiles signaled for the bitstream. When tiles do not exist, a value of the num_tiles field may be 0.

The TPS according to embodiments includes a loop that repeats as many times as a value of the num_tiles field. In this case, i is initialized to 0 and increases by 1 each time the loop is executed, and the loop is repeated until the value of i becomes the value of the num_tiles field. This loop may include a tile_bounding_box_offset_x[i] field, a tile_bounding_box_offset_y[i] field, a tile_bounding_box_offset_z[i] field, a tile_bounding_box_size_width[i] field, a tile_bounding_box_size_height[i] field, a tile_bounding_box_size_depth[i] field, and a scene_description_enable_flag[i] field.

The tile_bounding_box_offset_x[i] field represents an x-offset of an i-th tile in the Cartesian coordinate system.

The tile_bounding_box_offset_y[i] field represents a y-offset of an i-th tile in the Cartesian coordinate system.

The tile_bounding_box_offset_z[i] field represents a z-offset of an i-th tile in the Cartesian coordinate system.

The tile_bounding_box_size_width[i] field represents a width of an i-th tile in the Cartesian coordinate system.

The tile_bounding_box_size_height[i] field represents a height of the i-th tile in the Cartesian coordinate system.

The tile_bounding_box_size_depth[i] field represents a depth of the i-th tile in the Cartesian coordinate system.

The scene_description_enable_flag[i] field specifies whether a scene is constructed on the i-th tile in the Cartesian coordinate system. That is, this indicates whether scene construction is applied to the corresponding tile. The present disclosure provides, as an example, that when a value of the scene_description_enable_flag field is 1, scene construction is applied to the corresponding tile, and when the value is 0, the scene is not applied.

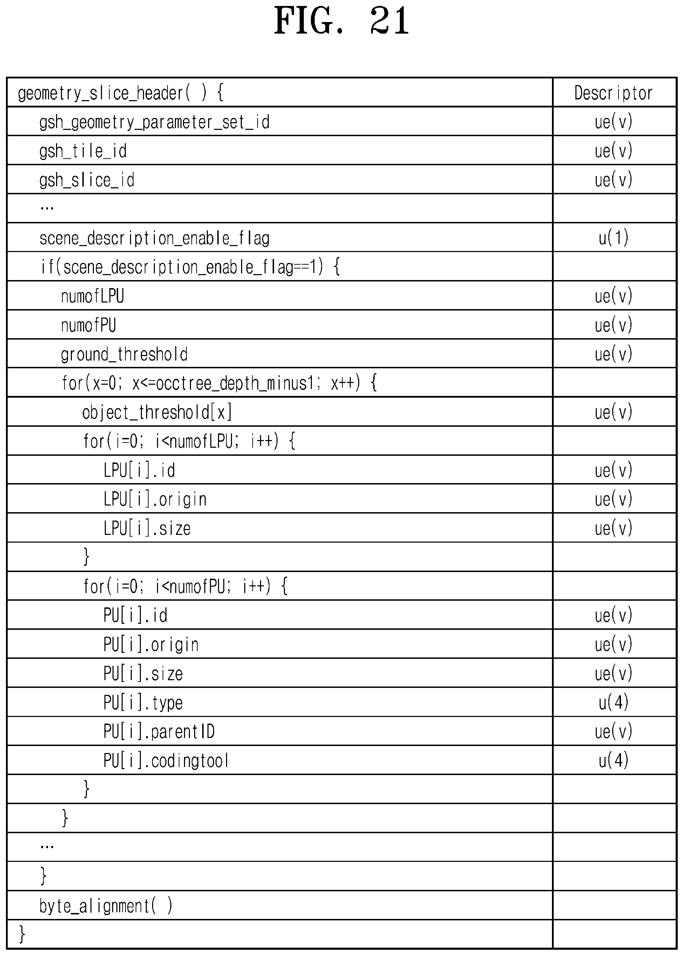

FIG. 21 is a diagram showing an example of a syntax structure of a geometry slice header according to embodiments. A geometry slice header according to embodiments includes signaling information for the corresponding geometry slice, and in particular, the drawing shows an example including information indicating whether a scene is constructed and scene construction information. In the present disclosure, the geometry slice header may be referred to as a geometry data unit header.

A bitstream transmitted by the transmission device according to the embodiments (or the bitstream received by the reception device) may include one or more slices. Each slice may include a geometry slice and an attribute slice. A geometry slice includes a geometry slice header (GSH). An attribute slice includes an attribute slice header (ASH).

The geometry slice header according to embodiments may include a gsh_geom_parameter_set_id field, a gsh_tile_id field, and a gsh_slice_id field.

The gsh_geom_parameter_set_id field represents a value of gps_geom_parameter_set_id of the active GPS.

The gsh_tile_id field represents an identifier of a corresponding tile referenced by a geometry slice header (GSH).

The gsh_slice_id represents an identifier of a corresponding slice for reference by other syntax elements.

According to embodiments, the geometry slice header may further include a scene_description_enable_flag field. The scene_description_enable_flag field specifies whether a scene is constructed in the corresponding slice. That is, this indicates whether scene construction is applied to the corresponding slice. The present disclosure provides, as an example, that when a value of the scene_description_enable_flag field is 1, scene construction is applied to the corresponding slice, and when the value is 0, the scene is not applied.

According to embodiments, the geometry slice header may further include scene construction information when a value of the scene_description_enable_flag field is 1, i.e., when this indicates that scene construction is applied to the corresponding slice.

According to embodiments, the scene construction information may include a numofLPU field, a numofPU field, a ground_threshold field, and an object_threshold field and LPU/PU construction information included for each octree depth (referred to as occtree_depth_minus1, or octree level).

The numofLPU field indicates the number of LPUs specified in scene construction of the corresponding slice.

The numofPU field indicates the number of PUs specified in scene construction of the corresponding slice.

The ground_threshold field specifies a threshold for ground PU partition specified in the scene construction of the corresponding slice.

According to embodiments, the scene construction information may include an object_threshold field and LPU/PU construction information while repeating as many times as a value of the occtree_depth_minus1.

The occtree_depth_minus1 is included in the geometry slice header when a value of the geom_tree_type field included in the GPS is 0, that is, when the geometry is coded using an occupancy tree (or octree).

The occtree_depth_minus1 specifies the maximum number of tree levels existing in the corresponding occupancy tree (or octree).

The object_threshold[x] field specifies a threshold for object PU partition at an x-th tree level specified in the scene construction of the corresponding slice. That is, the object_threshold field specifies a threshold for object PU partition specified in the scene construction of the corresponding slice.

The LPU/PU construction information may include LPU construction information while repeating as many times as a value of the numofLPU field, and PU construction information while repeating as many times as a value of the numofPU field. That is, the LPU construction information is signaled for each LPU, and PU construction information is signaled for each PU.

The LPU construction information may include an LPU[i].id field, an LPU[i].origin field, and an LPU[i].size field.

The LPU[i].id field represents identification information (ID) of an i-th LPU, the LPU[i].origin field represents origin information of an i-th LPU, and the LPU[i].size field represents size information of the i-th LPU. That is, the LPU[].id field represents an LPU ID specified in the scene construction of a corresponding slice, the LPU[].origin field represents the LPU origin information specified in the scene construction of the corresponding slice, and the LPU[].size field represents the LPU size information specified in the scene construction of the corresponding slice.

The PU construction information may include a PU[i].id field, a PU[i].origin field, a PU[i].size field, a PU[i].type field, a PU[i].parentID field, and a PU[i].codingtool field.

The PU[i].id field represents identification information (ID) of the i-th PU.

The PU[i].origin field represents origin information of the i-th PU.

The PU[i].size field represents size information of the i-th PU.

The PU[i].type field indicates a type of the i-th PU. For example, when a value of the PU[i].type field is 0, a type of the i-th PU indicates ground, when the value of the PU[i].type field is 1, the type of the i-th PU indicates an object, when the value of the PU[i].type field is 2, the type of the i-th PU indicates a dynamic object, and when the value of the PU[i].type field is 3, the type of the i-th PU indicates a static object.

The PU[i].parentID field represents identification information of a parent node of the i-th PU.

The PU[i].codingtool field represents a coding tool of the i-th PU.

That is, the PU[].id field represents a PU ID specified in the scene construction of a corresponding slice, the PU[].origin field represents the PU origin specified in the scene construction of the corresponding slice, the PU[].size field represents the PU size specified in the scene construction of the corresponding slice, the PU[].type field represents the PU type specified in the scene construction of the corresponding slice, the PU[].parentID field represents the PU parent ID specified in the scene construction of the corresponding slice, and the PU[].codingtool field represents the PU coding tool specified in the scene construction of the corresponding slice.

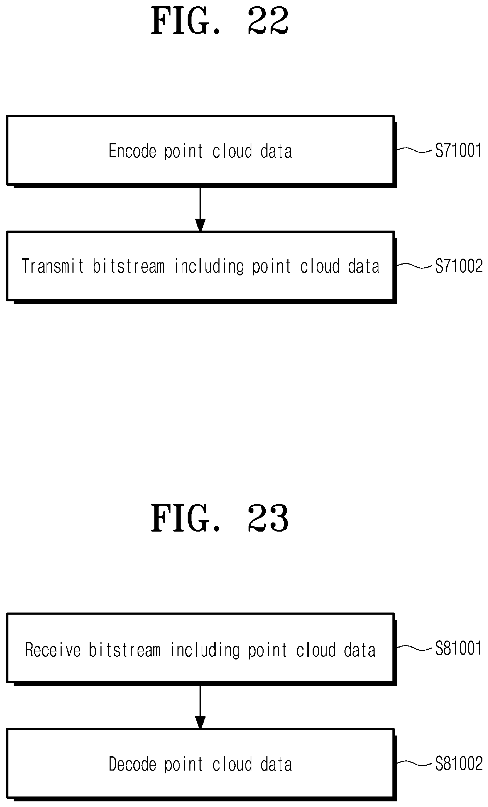

FIG. 22 shows a flowchart of a point cloud data transmission method according to embodiments.

The point cloud data transmission method according to embodiments may include encoding point cloud data (S71001) and transmitting a bitstream including the encoded point cloud data (S71002).

The encoding of the point cloud data (S71001) may be divided into encoding geometry and encoding attributes.

The encoding of the point cloud data (S71001) may perform some or all of the operations of the point cloud video encoder 10002 of FIG. 1, the encoding 20001 of FIG. 2, the point cloud video encoder of FIG. 3, the point cloud video encoder of FIG. 8, the geometry encoder and attribute encoder of FIG. 14 and/or the geometry encoder and attribute encoder of FIG. 15.

The encoding of the geometry encoder may include constructing a scene from point cloud data in frames, tiles, or slices based on information indicating whether a scene is constructed (e.g., scene_description_enable_flag), and signaling information about the constructed scene to transmit the information to the decoder.

To construct the scene, in the encoding of the geometry, a ground PU may be generated through a ground threshold and the other area may be constructed as an object LPU. For example, in the case of an object LPU, an object PU may be constructed through an object threshold while traversing the occupancy tree bottom-up, and when adjacent object PUs exist, these PUs may be grouped to construct an object LPU. As another example, the position (i.e., origin information) and size information of an object identified through image processing may be directly received to construct the ground PU, the object PU, and the object LPU.

The encoding of the geometry may include constructing a scene with one or more LPUs constructed as above and one or more PUs.

In this case, the information indicating whether a scene is constructed (e.g., scene_description_enable_flag) and the scene construction information may be signaled and transmitted to the decoder of the reception device. For example, scene construction information may include identification information for identifying each LPU and PU (e.g., LPU[].id, PU[].id), position information (e.g., LPU[].origin, PU[i].origin), size information (e.g., LPU[].size, PU[].size), characteristic (type) information (e.g., PU[].type), parent node information (e.g., PU[].parentID), threshold information (e.g., ground_threshold object_threshold), and applied coding tool information (e.g., PU[].codingtool).

The transmitting of the a bitstream containing the encoded point cloud data (S71002) may be performed by the transmitter 10003 of FIG. 1, the transmission 20002 of FIG. 2, the transmission processor 8012 of FIG. 8 or the signaling processor 51005 of FIG. 14.

The transmitted bitstream may further include signaling information. The signaling information may be included in SPS, GPS, APS, TPS (or tile inventory), geometry data header (or geometry slice header), and/or attribute data header (or attribute slice header). According to embodiments, the signaling information may include information indicating whether a scene is constructed and scene construction. That is, the signaling information including the information indicating whether a scene is constructed and the scene construction information may be included in at least one of an SPS, TPS, GPS, or geometry slice header and transmitted to a reception device. A detailed description of the information indicating whether a scene is constructed and the scene construction information is omitted here and refers to FIGS. 18 to 21.

FIG. 23 shows a flowchart of a point cloud data reception method according to embodiments.

The point cloud data reception method according to embodiments may include receiving a bitstream including point cloud data (S81001) and decoding the point cloud data (S81002).

The receiving of the bitstream according to embodiments (S81001) may be performed by the receiver 10005 of FIG. 1, the transmission 20002 or decoding 20003 of FIG. 2, the receiver 9000 or receiving processor 9001 of FIG. 9, or the receiving processor 61001 of FIG. 16. The received bitstream may further include signaling information. The signaling information may include information related to reflectance prediction. A detailed description of signaling information including the reflectance prediction information is omitted to avoid repeated descriptions and refers to the descriptions of FIGS. 19 to 23.

The decoding of the point cloud data (S81002) may be divided into decoding geometry and decoding attributes. The decoding of the point cloud data (S81002) may perform some or all of the operations of the point cloud video decoder 10006 of FIG. 1, the decoding 20003 of FIG. 2, the point cloud video decoder of FIG. 7, the point cloud video decoder of FIG. 9, the geometry decoder and attribute decoder of FIG. 16, and the geometry decoder and attribute decoder of FIG. 17.

The decoding the geometry may include restoring LPUs/PUs and reconstructing a scene based on signaling information transmitted from the encoder of the transmission device (e.g., information indicating whether a scene is constructed or scene construction information).

That is, the decoding of the geometry may include parsing and restoring the information indicating whether a scene is constructed and the scene construction information included in the signaling information, and restoring LPUs/PUs based on the restored information to reconstruct the scene. According to embodiments, the decoding of the geometry may include reconstructing the scene by restoring the LPUs/PUs when the information indicating whether a scene is constructed indicates that the scene is constructed. In the present disclosure, a detailed description of the information indicating whether a scene is constructed and the scene construction information is omitted here and refers to FIGS. 18 to 21.

The point cloud data reception method according to embodiments may further include rendering. The rendering may include restoring point cloud data based on decoded geometry and decoded attributes, and rendering the restored point cloud data according to various rendering methods. For example, the points of the point cloud content may be rendered as a vertex with a certain thickness, a cube with a specific minimum size centered at the corresponding vertex location, or a circle centered at a vertex location. All or part of the rendered point cloud content is provided to a user through a display (e.g., VR/AR display, or standard display).

The rendering of the point cloud data according to embodiments may be performed by the renderer 10007 of FIG. 1, the rendering 20004 of FIG. 2, or the renderer 9011 of FIG. 9. The scene reconstructed in the decoding of the geometry may be used for rendering in LPU/PU units through the rendering of the point cloud data.

As described above, the present disclosure may reduce a bitstream configuration and size by efficiently applying a coding tool, an inter-tool, or the like by combining a scene description or scene graph with a compression unit to efficiently support compression of captured content. That is, the present disclosure proposes a method of constructing a scene by compressing a point cloud rather than constructing a scene description or scene graph used in graphics for content used in real time, thereby enabling more efficient compression of geometry information.

In particular, the present disclosure proposes a method of representing and/or constructing a scene through an LPU and a PU to efficiently support content compression, thereby increasing the intra/inter geometry compression efficiency of the encoder/decoder of a G-PCC for 3D point cloud data compression and providing a point cloud content stream.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments of the embodiments have been shown and described, the embodiments are not limited to the specific embodiments described above, and various modifications may be made by one of ordinary skill in the art without departing from the spirit of the embodiments claimed in the claims, and such modifications should not be understood in isolation from the technical ideas or views of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In the present disclosure, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in the document, the term "or" should be interpreted to indicate "and/or." For instance, the expression "A or B" may comprise 1) only A, 2) only B, and/or 3) both A and B. In other words, the term "or" in the present disclosure should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/reception device including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of the present disclosure provided they come within the scope of the appended claims and their equivalents.

### MODE FOR INVENTION

As described above, related contents have been described in the best mode for carrying out the embodiments.

### INDUSTRIAL APPLICABILITY

As described above, the embodiments may be fully or partially applied to the point cloud data transmission/reception device and system. It will be apparent to those skilled in the art that various changes or modifications may be made to the embodiments within the scope of the embodiments. Thus, it is intended that the embodiments cover modifications and variations provided they come within the scope of the appended claims and their equivalents.

## Claims

1. A decoding method comprising:
receiving a bitstream including point cloud data; and
decoding the point cloud data.

2. The decoding method of claim 1, wherein the decoding of the point cloud data includes:
decoding geometry information within the point cloud data; and
decoding attribute information within the point cloud data, and
the decoding of the geometry information includes:
partitioning the geometry information into a plurality of prediction units based on information related to scene construction; and
constructing a scene based on the plurality of prediction units.

3. The decoding method of claim 2, wherein the scene includes a 2^{k} bounding box area having a minimum k that includes the point cloud data, and the plurality of prediction units each have origin information and size information.

4. The decoding method of claim 3, wherein the bitstream includes the information related to the scene construction,
the information related to the scene construction includes information specifying whether a scene is constructed and scene construction information, and
the scene construction information includes identification information, origin information, and size information for each of the plurality of prediction units.

5. The decoding method of claim 3, wherein the scene construction information further includes threshold information for the scene construction.

6. A decoding device comprising:
a memory; and
at least one processor connected to the memory, and
wherein the at least one processor is configured to:
receive a bitstream including point cloud data; and
decode the point cloud data.

7. The decoding device of claim 6, wherein the at least one processor includes:
a geometry decoder configured to decode geometry information within the point cloud data; and
an attribute decoder configured to decode attribute information within the point cloud data, and
the geometry decoder is configured to partition the geometry information into a plurality of prediction units based on information related to scene construction and construct a scene based on the plurality of prediction units.

8. The decoding device of claim 7, wherein the scene includes a 2^{k} bounding box area having a minimum k that includes the point cloud data, and the plurality of prediction units each have origin information and size information.

9. The decoding device of claim 8, wherein the bitstream includes the information related to the scene construction,
the information related to the scene construction includes information specifying whether a scene is constructed and scene construction information, and
the scene construction information includes identification information, origin information, and size information for each of the plurality of prediction units.

10. The decoding device of claim 8, wherein the scene construction information further includes threshold information for the scene construction.

11. An encoding method comprising:
encoding point cloud data; and
transmitting a bitstream including the point cloud data.

12. The encoding method of claim 11, wherein the encoding of the point cloud data includes:
encoding geometry information within the point cloud data; and
encoding attribute information within the point cloud data, and
the encoding of the geometry information includes:
partitioning the geometry information into a plurality of prediction units based on information related to scene construction; and
constructing a scene based on the plurality of prediction units.

13. The encoding method of claim 12, wherein the scene includes a 2^{k} bounding box area having a minimum k that includes the point cloud data, and the plurality of prediction units each have origin information and size information.

14. The encoding method of claim 13, wherein the bitstream includes the information related to the scene construction,
the information related to the scene construction includes information specifying whether a scene is constructed and scene construction information, and
the scene construction information includes identification information, origin information, and size information for each of the plurality of prediction units.

15. The encoding method of claim 13, wherein the scene construction information further includes threshold information for the scene construction.
